# EUROPEAN PATENT APPLICATION

(11) **EP 2 362 249 A2**
(43) Date of publication of application: **31.08.2011**
(21) Application number: 11155449.9
(22) Date of filing: 22.02.2011
(51) Int. Cl.: G02B 5/30, G02B 27/26

(54) **Circularly polarizing plate, circularly polarizing lens, and circularly polarizing glasses**

(30) Priority: 23.02.2010 JP 2010036899; 04.08.2010 JP 2010175134
(71) Applicant: Yamamoto Kogaku Co., Ltd., Osaka 577-0056 (JP)
(72) Inventor: Kobuchi, Nobuyuki, Higashiosaka-shi, Osaka 577-0056 (JP); Matsumoto, Kimio, Higashiosaka-shi, Osaka 577-0056 (JP); Yoshikawa, Keishi, Higashiosaka-shi, Osaka 577-0056 (JP); Oka, Koichiro, Higashiosaka-shi, Osaka 577-0056 (JP)
(74) Representative: Vossius & Partner

(57) **Abstract**

An object of the present invention is to provide a circularly polarizing plate with the thermally adhering function imparted thereto, a circularly polarizing lens which is reinforced with a backup resin, and is distorted with difficulty, and circularly polarizing glasses for viewing a three-dimensional movie, or a stereoscopic television, in which a lens is dropped off from a frame with difficulty even when the lens collides against objects, is pushed with a finger, or is exposed to change in a temperature or change in a humidity, and which has good appearance, and has a good wearing feeling.

There is provided a clockwise or counterclockwise circularly polarizing plate, characterized in that in a multilayered circularly polarizing plate having at least a phase difference functional part, a linear polarizing functional part, and a thermally adhering functional part which thermally adheres to a backup resin, the phase difference functional part is arranged on one side of the linear polarizing functional part, and the thermally adhering functional part is arranged on another side.

There is also provided a clockwise or counterclockwise circularly polarizing lens, which is a bending-processed product of the above circularly polarizing plate. There is further provided circularly polarizing glasses, characterized in that the above clockwise circularly polarizing lens and the above counterclockwise circularly polarizing are paired, and placed in one frame.

## Description

The present invention relates to a circularly polarizing plate, a circularly polarizing lens having no relationship with the presence or the absence of a correction degree, a circularly polarizing single-type lens for stereoscopic viewing, a circularly polarizing goggle lens for stereoscopic viewing, circularly polarizing twin-lens glasses for stereoscopic viewing, circularly polarizing single-lens glasses for stereoscopic viewing, and a circularly polarizing goggle for stereoscopic viewing.

Circularly polarizing twin-lens glasses for stereoscopic viewing, circularly polarizing single-lens glasses for stereoscopic viewing, and circularly polarizing goggles for stereoscopic viewing are used as a stereoscopic display called interleave filter system with a special polarizing filter attached thereto, for example, a stereoscopic viewing tool of a stereoscopic liquid crystal panel or television, a stereoscopic plasma panel or television, and a stereoscopic organic EL panel or television.

In addition, they are used as a stereoscopic viewing tool of a stereoscopic liquid crystal television of a projector system, or a three-dimensional movie.

For a stereoscopic viewing system, a variety of systems have been devised, and it is fundamental that two images a and b which are closely projected, and glasses provided with lenses a' and b' are combined as a set.

For stereoscopic viewing, it is fundamental that an image a is necessarily seen with a lens a' (i.e. eye on an a' side), and an image b is necessarily seen with a lens b' (i.e. eye on a b' side).

The interleave filter system which is one of methods for projecting two images a and b is a system in which a special phase difference filter is adhered to a panel, and polarizing property is alternately changed, for scanning lines, one by one, in a panel transverse direction (or a longitudinal direction), to separate left and right images (Patent Literatures 1∼3).

When exemplified by a liquid crystal display emitting linear polarized light, a panel in which a clockwise circularly polarizing line and a counterclockwise circularly polarizing line are alternately provided is made such that clockwise circular polarized light is applied to a scanning line in a transverse direction (or a longitudinal direction), counterclockwise circular polarized light is applied on a next line, and clockwise circular polarized light is applied on a further next line.

Specifically, a special phase difference filter in which a clockwise circularly polarizing line and a counterclockwise circularly polarizing line are alternately repeated, is adhered to a panel.

On the other hand, in glasses as a stereoscopic viewing tool, a clockwise circularly polarizing lens through which clockwise circular polarized light passes, is fitted on one side, and a counterclockwise circularly polarizing lens through which counterclockwise circular polarized light passes, is fitted on another side. That is, in a clockwise circularly polarizing lens, a counterclockwise circularly polarizing image formed with a counterclockwise circularly polarizing line is not seen, but a clockwise circularly polarizing image is seen. In a counterclockwise circularly polarizing lens, a clockwise circularly polarizing image formed with a clockwise circularly polarizing line is not seen, but a counterclockwise circularly polarizing image is seen.

That is, one eye becomes to see only a clockwise circularly polarizing image all the time, another eye becomes to see only a counterclockwise circularly polarizing image all the time and, thus, stereoscopic viewing becomes possible.

It becomes one important requirement of stereoscopic display that, even when an attitude of a viewing human is changed, for example, even when one lies down from the kneeling state, or vice versa, a stereoscopic feeling is changed little and, by a display of an interleave filter system which can form simultaneously a clockwise circularly polarizing image and a counterclockwise image circularly polarizing image on the same display screen, and circularly polarizing glasses in which a clockwise circularly polarizing lens and a counterclockwise circularly polarizing lens are paired, as described above, the minimum of such the requirement is satisfied.

In the case of a display emitting no linear polarized light such as a plasma display and an organic EL display, by adhering a special filter in which a linear polarizing sheet, and a special phase difference filter in which the clockwise circularly polarizing line and the counterclockwise circularly polarizing line are alternately repeated are laminated, to a display surface, stereoscopic viewing becomes possible with similar circularly polarizing glasses.

Even in the case of a stereoscopic liquid crystal television, and a three-dimensional movie of a projector system, when a clockwise circularly polarizing image and a counterclockwise circularly polarizing image can be reflected on a screen, stereoscopic viewing becomes possible with the similar circularly polarizing glasses.

Like this, for a stereoscopic vision of an interleave filter system, circularly polarizing glasses in which one clockwise circularly polarizing lens and one counterclockwise circularly polarizing lens are fitted, have been made (Patent Literature 4).

Prior Art Literature:
Patent Literature 1: JP-A No. 2008-257207
Patent Literature 2: JP-A No. 2008-304909
Patent Literature 3: JP-A No. 2009-109968
Patent Literature 4: JP-A No. 2009-507248

A circularly polarizing lens used in currently commercially available circularly polarizing twin-lens glasses is made of, in most cases, a circularly polarizing plate in which a phase difference sheet made of polycarbonate, and a linear polarizing plate made of triacetate (in which both sides of a polarizer are laminated with a protective sheet made of triacetate, in a sandwich manner) are laminated, and adhered.

A clockwise circularly polarizing lens is made of a clockwise circularly polarizing plate, and a counterclockwise circularly polarizing lens is made of a counterclockwise circularly polarizing plate, and clockwise and counterclockwise circularly polarizing plates can be made differently, by setting a certain angle between a polarizing direction of a polarizer (or a direction of stretching a polarizer upon making of a polarizer; or also referred to as absorption axis direction) and a direction of a phase difference of a phase difference sheet (or a direction of stretching a phase difference sheet upon making of a phase difference sheet; or also referred to as slow axis direction), upon adhesion of the phase difference sheet and the linear polarizing plate.

That is, when a circularly polarizing lens is placed into a glass frame so that a transmission axis direction of a polarizer (or a direction orthogonal to a stretching direction upon making of a polarizer) becomes a horizontal direction (a direction of connecting two lenses of glasses is a horizontal direction), application such that a stretching direction of a phase difference sheet has inclination of connecting 10 o'clock and a half and 4 o'clock and a half of a horologe hour hand becomes a clockwise circularly polarizing plate, consequently, a clockwise circularly polarizing lens (which is fitted in a glass frame so that a phase difference sheet is on an object side), and application such that a slow axis direction of a phase difference sheet has inclination of connecting one o'clock and a half and seven o'clock and a half of a horologe hour hand becomes a counterclockwise circularly polarizing plate, consequently, a counterclockwise circularly polarizing lens (which is fitted in a glass frame so that a phase difference sheet is on an object side).

Meanwhile, most of previous circularly polarizing plates have a thickness of 0.3 mm or less, and low rigidity, and are flimsy when touched, and they are punched into a glasses lens shape, and are fitted in a twin-lens spectacle-type frame (frame), in many cases.

In addition, there was a problem that since the lens has a low bending rigidity, the functions of protecting both eyes from flying objects is weak and, when repeatedly used, or used by a number of persons, the lens collides against objects, is pushed with a finger, and exposed to change in a temperature or change in a humidity and, later, the circularly polarizing lens is distorted, broken, or cracked or dropped off from a glasses frame.

In addition, a circularly polarizing single-type lens and a circularly polarizing goggle lens for stereoscopic viewing, in the state where a clockwise circularly polarizing lens and a counterclockwise circularly polarizing lens are arranged in line one by one, as well as circularly polarizing single-lens glasses, and circularly polarizing goggles for stereoscopic viewing, made therefrom, were not present, or even when they were present, since they have a low bending rigidity, the function of protecting both eyes from flying objects was weak.

In order to solve the aforementioned problems, the following means were invented.

A clockwise or counterclockwise circularly polarizing plate, characterized in that, in a multilayered circularly polarizing plate having at least a phase difference functional part, a linear polarizing functional part, and a thermally adhering functional part which thermally adheres to a backup resin, the phase difference functional part is arranged on one side of the linear polarizing functional part, and the thermally adhering functional part is arranged on the other side.

A clockwise or counterclockwise circularly polarizing plate, characterized in that a linear polarizing functional part is a linear polarizer, both sides of the linear polarizer are protected with protective sheets, one of the protective sheets is a phase difference sheet, or a phase difference plate, and the other protective sheet is a thermally adhering sheet having the thermally adhering function.

A clockwise or counterclockwise circularly polarizing plate, characterized in that a linear polarizing functional part is a linear polarizer, both sides of the linear polarizer are protected with protective sheets, a phase difference sheet or a phase difference plate is arranged on one of the protective sheets, and a thermally adhering sheet having the thermally adhering function is arranged on the other protective sheet.

A clockwise or counterclockwise circularly polarizing plate, characterized in that a linear polarizing functional group is a linear polarizer, both sides of the linear polarizer are protected with protective sheets, a phase difference sheet or a phase difference plate is arranged on one of the protective sheets, and the other protective sheet is a thermally adhering sheet having the thermally adhering functions.

A clockwise or counterclockwise circularly polarizing plate, characterized in that a linear polarizing functional part is a linear polarizer, both sides of the linear polarizer are protected with protective sheets, one of the protective sheets is a phase difference sheet or a phase difference plate, and a thermally adhering sheet having the thermally adhering function is arranged on the other protective sheet.

The clockwise or counterclockwise circularly polarizing plate as described above, wherein the thermally adhering function is complemented with a thermally adhering coating layer which is provided on a thermally adhering side.

The clockwise or counterclockwise circularly polarizing plate as described above, wherein the protective sheet is a sheet comprising or consisting essentially of a polycarbonate resin, a polyamide resin, a polyester resin, a polyacryl resin, a polycycloolefin resin, a polyurethane resin, or an acylcellulose resin.

The clockwise or counterclockwise circularly polarizing plate as described above, wherein the phase difference sheet is a 1/4λ phase difference sheet, or a laminated structure of a 1/4λ phase difference sheet and a 1/21λ phase difference sheet.

The clockwise or counterclockwise circularly polarizing plate as described above, wherein the phase difference sheet is a sheet comprising or consisting essentially of a polycarbonate resin, a polycycloolefin resin, a polyamide resin, or a liquid crystal polymer resin.

The clockwise or counterclockwise circularly polarizing plate as described above, wherein the phase difference sheet is a sheet of a resin having a glass transition temperature of 150ºC or higher.

The clockwise or counterclockwise circularly polarizing plate as described above, wherein the thermally adhering sheet is a sheet comprising or consisting essentially of a polycarbonate resin, a polyamide resin, a polyester resin, a polyacryl resin, a polycycloolefin resin, or a polyurethane resin.

A clockwise or counterclockwise circularly polarizing lens, wherein the circularly polarizing plate is shaped into a lens.

The clockwise or counterclockwise circularly polarizing lens as described above, wherein the circularly polarizing lens is a bending-processed product.

The clockwise or counterclockwise circularly polarizing lens as described above, wherein the circularly polarizing lens is a bending-processed lens by a suction free bending-processing method.

The clockwise or counterclockwise circularly polarizing lens as described above, wherein a backup resin is injection-molded on a thermally adhering functional part of the clockwise or counterclockwise circularly polarizing lens.

The clockwise or counterclockwise circularly polarizing lens as described above, wherein the backup resin comprises or consists essentially of a polycarbonate resin, a polyamide resin, a polyester resin, a polyacryl resin, a polycycloolefin resin, or a polyurethane resin.

A circularly polarizing single-type lens for stereoscopic viewing, or a circularly polarizing single-lens goggle for stereoscopic viewing, characterized in that a clockwise circularly polarizing lens and a counterclockwise circularly polarizing lens are arranged in line, in which a backup resin is simultaneously injection-molded on a thermally adhering functional part, in the state where the clockwise and counterclockwise circularly polarizing plates as described above, or the clockwise circularly polarizing lens and the counterclockwise circularly polarizing lens as described above are arranged in line one by one.

The circularly polarizing single-type lens for stereoscopic viewing or the circularly polarizing single-lens goggle for stereoscopic viewing as described above, wherein the backup resin is any of a polycarbonate resin, a polyamide resin, a polyester resin, a polyacryl resin, a polycycloolefin resin, and a polyurethane resin.

A circularly polarizing twin-lens glasses for stereoscopic viewing or a circularly polarizing twin-lens goggle for stereoscopic viewing, characterized in that the circularly polarizing lenses as described above are sorted into a clockwise circularly polarizing lens and a counterclockwise circularly polarizing lens, one clockwise circularly polarizing lens and one counterclockwise circularly polarizing lens are paired, and the clockwise circularly polarizing lens is placed in a frame for one eye, and the counterclockwise circularly polarizing lens is placed in a frame for another eye.

A circularly polarizing single-lens glasses for stereoscopic viewing, characterized in that it comprises the circularly polarizing single-type lens for stereoscopic viewing as described above as an optical part.

A circularly polarizing single-lens goggle for stereoscopic viewing, characterized in that it comprises the circularly polarizing single-type goggle lens for stereoscopic viewing as described above as an optical part.

According to the present invention, it has become possible to impart the thermally adhering function to a circularly polarizing plate having no thermally adhering function.

In addition, by injection-molding a backup resin on a thermally adhering functional part of a circularly polarizing plate, it has become possible to manufacture a hardly distortable circularly polarizing lens, reinforced with a backup resin.

In addition, by placing a circularly polarizing lens reinforced with a backup resin in a frame, it has become possible to manufacture a circularly polarizing glasses for viewing a three-dimensiorlal movie, a stereoscopic television or a stereoscopic game, in which even when it is used by a large indefinite number of persons, or collides against an object, is pushed with a finger, or is exposed to change in a temperature, or change in a humidity, the lens is dropped off from a frame with difficulty, the lens is good-looking, and a wearing feeling is good.

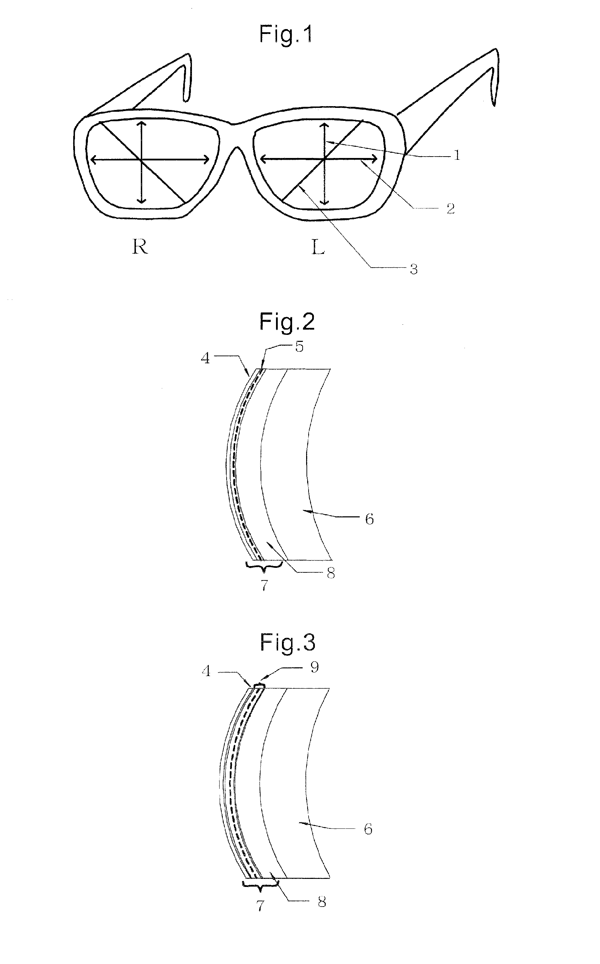

Fig.1 is a schematic perspective showing a circularly polarizing glasses of the present invention.
Fig.2 is a schematic cross-sectional view showing a circularly polarizing planolens obtained in Example 15.
Fig.3 is a schematic cross-sectional view showing a circularly polarizing planolens obtained in Example 16. In Fig.3, a TAC polarizing plate consists of a TAC sheet, a linear polarizer, and a TAC sheet from a left side.

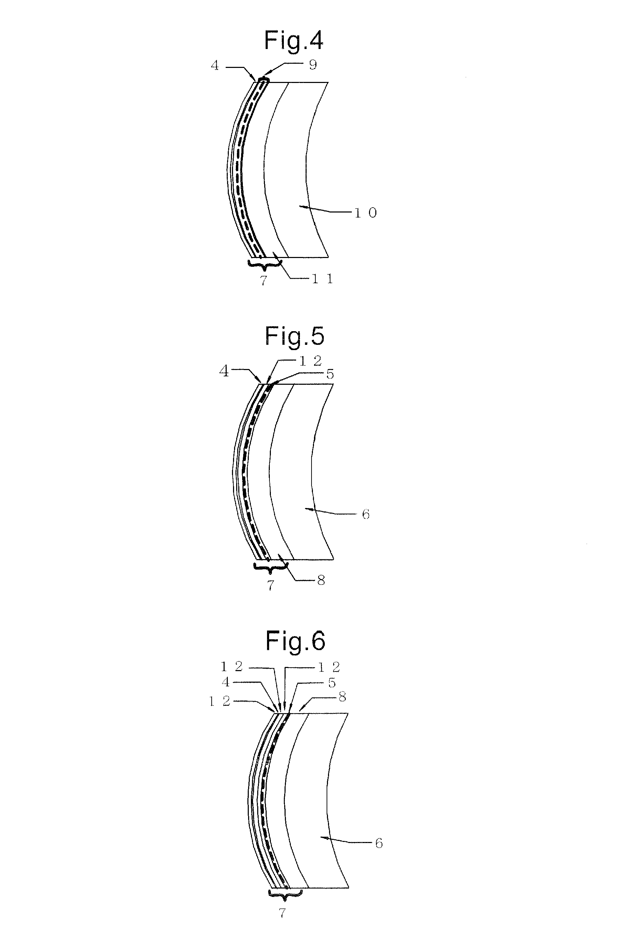

Fig.4 is a schematic cross-sectional view showing a circularly polarizing planolens obtained in Example 17.
Fig.5 is a schematic cross-sectional view showing a circularly polarizing planolens obtained in Example 18
Fig.6 is a schematic cross-sectional view showing a circularly polarizing planolens obtained in Example 19.

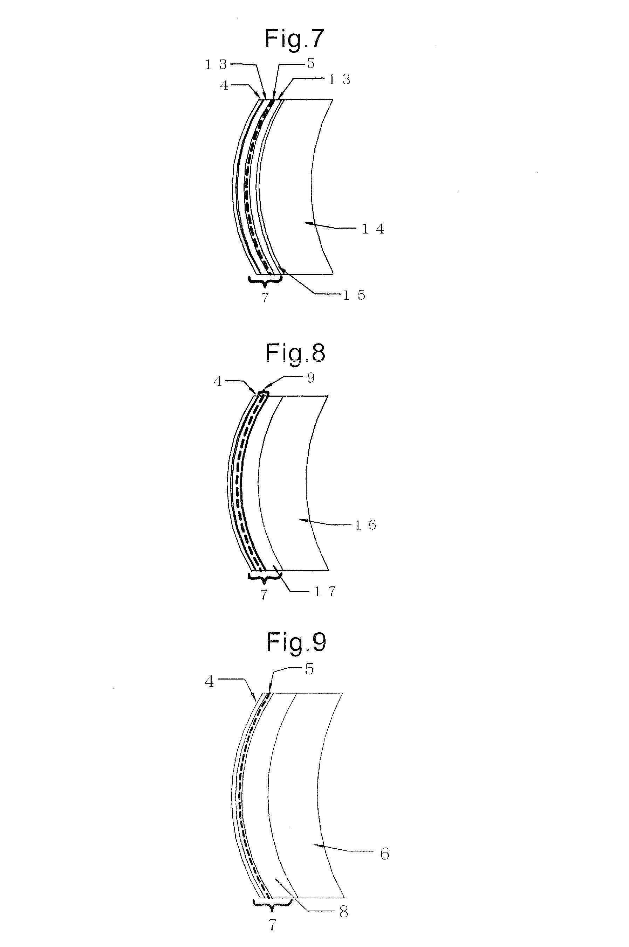

Fig.7 is a schematic cross-sectional view showing a circularly polarizing planolens obtained in Example 20.
Fig.8 is a schematic cross-sectional view showing a circularly polarizing planolens obtained in Example 21.
Fig.9 is a schematic cross-sectional view showing a circularly polarizing planolens obtained in Example 39.

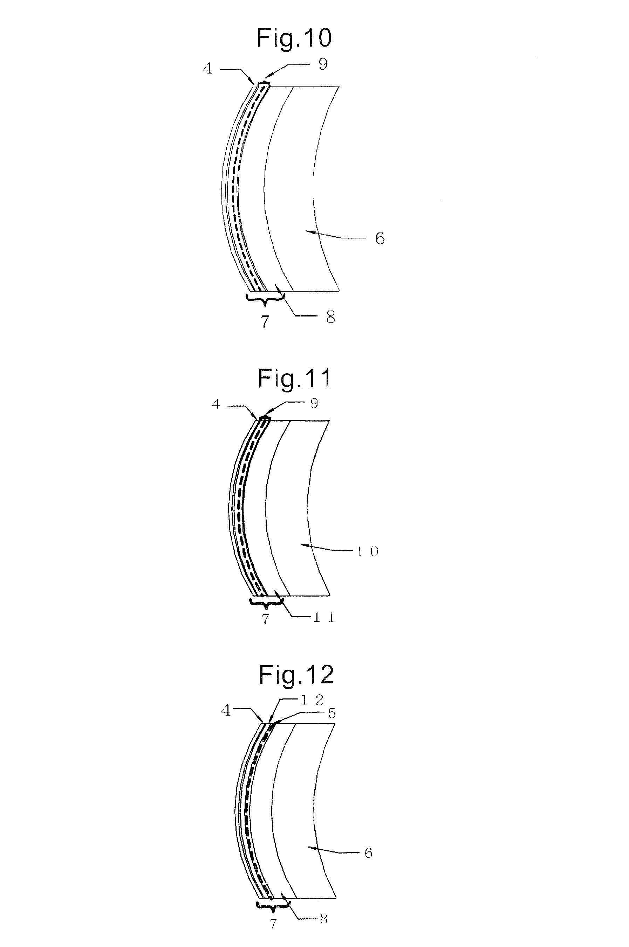

Fig.10 is a schematic cross-sectional view showing a circularly polarizing planolens obtained in Example 40. In Fig.10, a TAC polarizing plate consists of a TAC sheet, a linear polarizer, and a TAC sheet from a left side.
Fig.11 is a schematic cross-sectional view showing a circularly polarizing planolens obtained in Example 41.
Fig.12 is a schematic cross-sectional view showing a circularly polarizing planolens obtained in Example 42.

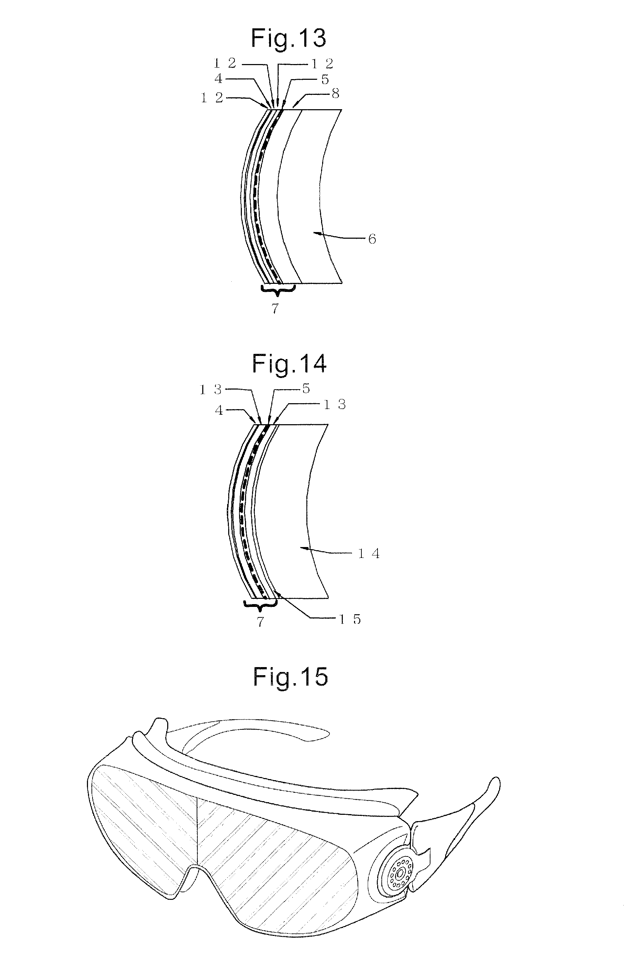

Fig.13 is a schematic cross-sectional view showing a circularly polarizing planolens obtained in Example 43.
Fig.14 is a schematic cross-sectional view showing a circularly polarizing planolens obtained in Example 44.
Fig.15 is a schematic perspective showing a single-lens goggle-type circularly polarizing glasses of the present invention. In the figure, a double line indicates a slow axis direction of a phase difference, an absorption axis of a polarizing plate becomes a vertical direction, and a transmission axis direction becomes a horizontal direction.

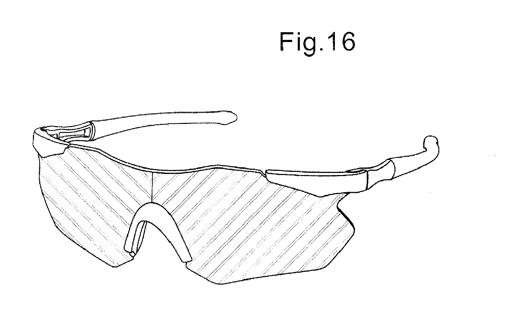

Fig.16 is a schematic perspective showing a single-lens-type circularly polarizing glasses of the present invention. In the figure, a double line indicates a slow axis direction of a phase difference, an absorption axis of a polarizing plate becomes a vertical direction, and a transmission axis direction becomes a horizontal direction.

The term "phase difference functional part" used herein generally refers to a phase difference sheet itself, or a phase difference plate in which a phase difference sheet and a protective sheet are adhered.
The term "linear polarizing functional part" used herein generally refers to a linear polarizer, or a polarizing plate in which a linear polarizer and a protective sheet are adhered.
The term "thermally adhering functional part" used herein generally refers to a part having the function of thermally adhering to a backup resin when a backup resin is preferably injection-molded, namely, a protective sheet for a linear polarizer plate, or a thermally adhering sheet which is to be newly adhered, for thermal adhering.
The term "phase difference plate" used herein generally refers to a plate in which a phase difference sheet and a protective sheet are adhered.
The term "thermally adhering function" used herein generally refers to the function of thermally adhering to preferably an injection-molded backup resin.

The first aspect of the present invention (hereinafter, referred to as first invention) relates to a circularly polarizing plate.

That is, the first invention is a novel circularly polarizing plate, characterized in that, in a multilayered circularly polarizing plate having at least a phase difference functional part, a linear polarizing functional part, and a thermally adhering functional part which thermally adheres to a backup resin, the phase difference functional part is arranged on one side of the linear polarizing functional part, and the thermally adhering functional part is arranged on the other side.

The first invention have first to fifth five cases which will be sequentially explained below, depending on the phase difference functional part, the linear polarizing functional part, and the thermally adhering functional part which thermally adheres to a backup resin.

The first case of the first invention is a circularly polarizing plate, characterized in that a linear polarizing functional part is a linear polarizer, one sheet of protective sheets which protect both sides of the linear polarizer is a phase difference sheet, or a phase difference plate, and the other sheet is a thermally adhering sheet having the thermally adhering function.

The linear polarizer is usually a uniform resin sheet having a thickness of 0.1 mm or less. Preferably, the linear polarizer is a monoaxially stretched sheet of a polyvinyl alcohol-based resin such as polyvinyl alcohol, polyvinyl acetal, and polyvinyl butyral.

In order to obtain a high linear polarization degree, a sheet which has been stretched at a stretching ratio of around 2 to 5-fold is doped with iodine or a dichroic dye.

The iodine doping method using iodine has the characteristic that it imparts little inherent colorization to the linear polarizer as compared with the dye doping method using a dye, and a high polarization degree is easily obtained, but since it uses iodine which is easily sublimated, there is a defect that heat resistance is inferior. On the other hand, the dye doping method has higher heat resistance than that of the iodine doping method, but there is a problem that a hue inherent to the dye appears in the linear polarizer, and there is a problem that a polarization degree is different depending on the dye, that is, a hue.

As described later, in the present invention, a circularly polarizing plate is bending-processed to make a circularly polarizing lens, and a concave side is backed up with a resin by an injection-molding method in some cases, and in a polarizer by the iodine doping method, iodine is sublimated, and a polarization degree is reduced, in some case, by heat of bending-processing, or heat of injection-molding of a backup resin. For this reason, in the present invention, the polarizer by the dye doping method having high thermal stability is recommended.

The phase difference sheet is usually a uniform resin sheet having a thickness of 0.2 mm or less, and a thickness is optically set depending on a degree of a phase difference required, and a sheet having a phase difference of 1/4λ is usually used preferably.

Alternatively, as the phase difference sheet, a laminate (or a laminated structure) of a combination of a phase difference sheet of 1/4λ and a phase difference sheet of 1/2λ is used in some cases. That is, by laminating a 1/2λ phase difference sheet on a circularly polarizing plate which was clockwisely designed, it can be prepared into a counterclockwise circularly polarizing plate. A 1/2λ phase difference sheet is also usually a uniform resin sheet having a thickness of 0.2 mm or less, and a thickness is optically set.

Regardless of an extent of a phase difference, a resin used in the phase difference sheet is generally a polycarbonate resin, a polycycloolefin resin, a polyamide resin, a liquid crystal polymer such as polyarylate, or a polysulfone resin.

To a resin is added stabilizers such as ultraviolet absorbing agents and antioxidants, in many cases. The phase difference sheet is a sheet obtained by stretching an extrusion-molded sheet in a monoaxial direction or a biaxial direction.

As described later, in the present invention, a backup resin is injection-molded on a thermally adhering functional part, in some cases.

However, injection-molding of the backup resin often results in thermal shrinkage of the phase difference sheet. Thermal shrinkage of the phase difference sheet means that any change is imparted to a phase difference value which was proper originally and, as a result, this leads to damage of circularly polarizing performance which was proper originally. Phenomenonally, in one lens, a circularly polarizing performance variance occurs. When a lens having a circularly polarizing performance variation is placed in a frame to make glasses for stereoscopic viewing, this results in circularly polarizing glasses having reduced stereoscopic viewing performance.

For this reason, as a resin used in the phase difference sheet, a resin having high heat resistance, and a glass transition temperature (Tg) of 150°C or higher, preferably 160°C or higher is suitable.

As the phase difference plate, a phase difference plate obtained by adhering a resin sheet having small optical anisotropy such as triacetylcellulose (TAC), polymethyl methacrylate, and cycloolefin resin on one side or both sides of the aforementioned phase difference sheet, thereby, reinforcing it is known, and is a laminated sheet having a thickness of around 0.1 to 0.5 mm.

The thermally adhering sheet having the thermally adhering function is made from a thermoplastic transparent resin such as a polycarbonate resin, a polyamide resin, a polyester resin, a polyurethane resin, a polyacryl resin, a polycycloolefin resin, a polystyrene resin, a polyvinyl chloride resin, a polystyrene-methyl methacrylate resin, a polyacrylonitrile-styrene resin, and a poly-4-methylpentene-1 resin.

Among them, from easiness of production of a sheet, any of a polycarbonate resin, a polyamide resin, a polyester resin, a polyacryl resin, a polycycloolefin resin, and a polyurethane resin is preferably used.

Since the thermally adhering sheet has thermal adhering adaptability with the backup resin, the case where the thermally adhering sheet and the backup resin are chemically cognatic resins, or any one of the thermally adhering sheet and the backup resin is a polyurethane resin having high thermal adherability, is preferable.

To these resins are added additives such as ultraviolet absorbing agents and antioxidants, in many cases. It is not necessary that the thermally adhering sheet is monoaxially or biaxially stretched. Rather, since when not stretched, thermal shrinkage does not occur upon bending-processing or backup injection-molding, distortion is generated in a circularly polarizing lens with difficulty.

A thickness of the thermally adhering sheet is preferably around 0.01 to 1 mm, more preferably around 0.02 to 0.8 mm. When the thickness of the sheet is less than 0.01 mm, the circularly polarizing plate and the circularly polarizing lens become too thin, they are handled with difficultly, and when the thickness exceeds 1 mm, there is a problem that thickness balance between the phase difference sheet is damaged, and warpage is easily generated in the circularly polarizing plate.

The circularly polarizing plate is a laminate of a combination of at least the linear polarizer and the phase difference sheet, and the circularly polarizing plate becomes a clockwise circularly polarizing plate, or a counterclockwise circularly polarizing plate, or an elliptic circularly polarizing plate, depending on an angle between a direction (stretching direction) of the linear polarizer and a direction (stretching direction) of the 1/4λ phase difference sheet.

In addition, when the 1/2λ phase difference sheet is laminated on the phase difference functional side of the clockwise circularly polarizing plate so that a stretching direction is in conformity with that of the 1/4λ phase difference sheet, a counterclockwise circularly polarizing plate is obtained. This is also true in the counterclockwise circularly polarizing plate and, by laminating the 1/2λ phase difference sheet, a clockwise circularly polarizing plate can be prepared.

Therefore, a combination angle between the linear polarizer and the phase difference sheet is extremely important, and it is normal that a combined laminate of both of them is fixed with an adhesive to each other, so that the correct circularly polarizing performance is obtained, and the circularly polarizing performance is not changed.

An adhesive or a pressure-sensitive adhesive used for adhering the linear polarizer, the phase difference sheet or the phase difference plate, and the thermally adhering sheet needs long term durability for water, heat and ultraviolet ray and, fundamentally, is not particularly limited as far as it passes them. Long term durability is complemented by adding stabilizers such as ultraviolet absorbing agents and antioxidants, in many cases.

Examples of the adhesive include an isocyanate compound, a polyurethane resin, a polythiourethane resin, an epoxy resin, a polyvinyl acetate resin, a polyacryl resin, and a wax. Examples of the pressure-sensitive adhesive include a vinyl acetate resin, and an acryl resin.

Upon adhesion, the adhesive or the pressure-sensitive adhesive is uniformly coated on the linear polarizer, the phase difference sheet or the thermally adhering sheet by a general coating method such as a gravure coating method and an offset coating method.

A thickness of the adhesive layer or the pressure-sensitive adhesive layer is usually 0.1 to 100 *µ*m, preferably 0.5 to 80 *µ*m. When a thickness of the adhesive layer or the pressure-sensitive adhesive layer is less than 0.1 *µ*m, an adhering force is low and, when a thickness exceeds 100 *µ*m, the adhesive or the pressure-sensitive adhesive is bled out from an edge face of the circularly polarizing plate, in some cases.

The second case of the first invention is a circularly polarizing plate, characterized in that a linear polarizing functional part is a polarizing plate consisting of a linear polarizer, and two protective sheets holding it, a phase difference sheet having the phase difference function, or a phase difference plate is arranged on one of the protective sheets, and a thermally adhering sheet having the thermally adhering function is arranged on the other protective sheet.

A linear polarizer of a polyvinyl alcohol-based resin has generally a weak physical strength, and it has hygroscopicity and, therefore, it can not be said that the linear polarizer has good handling property. For this reason, a polarizer reinforced by adhering a protective sheet thereto is called linear polarizing plate (or polarizing plate), and a linear polarizing plate having improved handing property of a polarizer is generally adopted as a fundamental form of distribution and processing.

A general structure of the linear polarizing plate is such that a protective sheet is adhered to each side of one polarizer. That is, this is a three-layered laminate in which protective sheet-linear polarizer-protective sheet are laminated in this order.

The protective sheet is generally made by an extrusion-molding method or a cast-molding method. As the protective sheet by the extrusion-molding method, there are sheets of transparent thermoplastic resins such as a polycarbonate resin, a polyamide resin, a polyester resin, a polyurethane resin, a polyacryl resin, a polycycloolefin resin, a polystyrene resin, a polyvinyl chloride resin, a polystyrene·methyl methacrylate resin, a polyacrylonitrile-styrene resin, a poly-4-methylpentene-1 resin, and an acylcellulose resin with a plasticizer added thereto.

It is desirable that the protective sheet has an amount of optical anisotropy as small as possible, and is easily produced.

Examples of a particularly preferable transparent thermoplastic resin include a polycarbonate resin, a polyamide resin, a polyester resin, a polyurethane resin, a polyacryl resin, and a polycycloolefin resin, from a view point of easiness of extrusion-molding and easily obtained high transparency.

To these resins are added stabilizers such as ultraviolet absorbing agents and antioxidants in many cases. As the polycarbonate resin, an aromatic polycarbonate resin containing mainly aromatic phenols such as bisphenol A, and an polymer alloy of an aromatic polycarbonate resin and a polyester resin are preferable from a view point of enhancement of a physical strength of a linear polarizing plate.

Among them, a bisphenol A-based polycarbonate resin having a viscosity average molecular weight of 15000 or more, preferably 18000 or more is particularly recommended since it is excellent in a strength and toughness of a circularly polarizing lens, and has the high function of protecting eyes.

The polyamide resin is polyamide obtained by polycondencing alicyclic or aliphatic dicarboxylic acid, and alicyclic or aliphatic diamine, and a polyamide resin having a hardness, a strength, and strong toughness, which is amorphous and has a high transparency degree is preferable.

From necessity of being particularly highly transparent, polyamide called amorphous nylon or transparent nylon is preferably used. Representative examples include "GRILAMID" TR-55 and "GRILAMID" TR-90 of EMS CHEMIE, and "TROGAMID" CX-7323 of HULS. The transparent nylon has generally the characteristic that optical anisotropy is smaller than that of a polycarbonate resin. In addition, there is a tendency that solvent resistance such as solvent crack resistance is higher than that of a polycarbonate resin.

As the polyester resin, a polyester resin containing, as a main component of dicarboxylic acid, aromatic dicarboxylic acid such as terephthalic acid is preferably used from a view point of a hardness, a strength, strong toughness, and transparency.

As the polyurethane resin, among polyurethane resins containing, as a diisocyanate component, aromatic diisocyanate or alicyclic diisocyanate, a polyurethane resin which has a hardness, a strength, and strong toughness, hardly causes crystallization, and has high transparency is preferable.

Preferable examples include polyester-based polyurethane "ELASTOLLAN" ET590, "ELASTOLLAN" ET595, and "ELASTOLLAN" ET598 of BASF, and polyether-based polyurethane of the same company.

Examples of the polyacryl resin include acryl resins including a methacrylate-based polymer such as methyl methacrylate and cyclohexyl methacrylate, and a copolymer, from a view point of a hardness, a strength, and transparency.

The polycycloolefin resin generally has the characteristic that birefringence is small, and a sheet having small optical anisotropy is easily obtained. In addition, the resin has the characteristic that heat resistance is high and, even when manufactured into a circularly polarizing lens having a high curve, a variance is hardly generated in phase difference performance. Examples of a representative cycloolefin resin (and cycloolefin copolymerized resin) include "ZEONEX" and "ZEONOR" of Zeon Corporation, "ARTON" of JSR, "OPTOREZ" of Hitachi Chemical Company, Ltd., "APEL" of Mitsui Chemicals, Inc., and "ESSINA" of Sekisui Chemical Co., Ltd.

Contrary to the protective sheet by an extrusion-molding method, the protective sheet by a cast-molding method has the preferable property as a protective sheet of a linear polarizing plate since it has small optical anisotropy.

As a process for producing a representative cast-molded sheet, an acylcellulose sheet will be exemplified. In the cast-molding method, acylcelluloses such as triacetylcellulose, diacetylcellulose, tripropylcellulose, and dipropylcellulose is dissolved in, for example, acetone or methylene chloride to prepare a solution. Then, the solution is cast on a belt or a plate, and a solvent is removed by heating or pressure reducing treatment to make a sheet.

A polycycloolefin resin is also made into a sheet by a solution-casting method, in some cases. In addition, for example, there is a polyacryl resin sheet obtained by sealing (meth)acrylates containing mainly methyl methacrylate between glass plates, and casting-molding it by a so-called inter-plate polymerization method.

As the inter-plate polymerization method sheet, there is a polyurethane resin sheet in addition to this. The polyurethane resin sheet by inter-plate polymerization is obtained by mixing aromatic polyisocyanates such as tolylene diisocyanate (TDI), meta-xylene diisocyanate (MDI), and diphenylmethane-4,4'-diisocyanate, or aliphatic polyisocyanates such as hexamethylene diisocyanate, and isophorone diisocyanate, and polyols such as aliphatic glycols such as ethylene glycol, and 1,3-propane glycol, polyether-based glycols such as polyethylene glycol, and polypropylene glycol, and polyester-based glycols such as caprolactone-based glycol, and adipate-based glycol.

As the protective sheet by a cast-molding method, a protective sheet for which the technique of industrially producing a sheet has been already established is preferable, and examples of a resin for which the technique of industrially producing such sheet has been established, include an acylcellulose resin such as triacetylcellulose (TAC), a polycycloolefin resin, and a polyacryl resin.

To these resins are added stabilizers such as ultraviolet absorbing agents and antioxidants, in many cases.

A linear polarizing plate which is particularly preferable in the present invention is such that a phase difference sheet, or a protective sheet on a side of adhesion of a phase difference plate is an optically uniform sheet.

That is, of two protective sheets of a polarizing plate, at least one is a sheet having high optically uniformity such as a cast-molded acylcellulose sheet, particularly, a triacetylcellulose (TAC) sheet, a cycloolefin resin sheet, a polymethacryl resin sheet, and a polyurethane resin sheet. The phase difference sheet, or the phase difference plate is adhered on a protective sheet having high optical uniformity.

A thickness of the protective sheet is preferably around 0.01 to 1.0 mm, more preferably around 0.02 to 0.8 mm regardless of a process for producing a sheet such as an extrusion-molding method and a cast-molding method. When a thickness is less than 0.01 mm, the activity of protecting a polarizer is weakened. On the other hand, when a thickness exceeds 1.0 mm, bending-processing of a polarizing sheet becomes difficult in some cases, as described later.

It is not necessary that two protective sheets which sandwich a polarizer are consistent in a kind of a resin, a sheet molding method, a stretching ratio, and a sheet thickness, but it is preferable that those protective sheets are substantially the same sheet, from a view point of easiness of manufacturing of a polarizing plate, the absence of warpage, and easiness of handling.

It is general that the polarizer and the protective sheets are adhered using an adhesive or a pressure-sensitive adhesive.

A protective sheet by a cast-molding method having little optical anisotropy becomes problematic in rare cases, but in the case of a protective sheet by an extrusion-molding method, if it is a stretched sheet, directionality of the polarizer and the protective sheet in adhesion becomes a problem. That is, unless a stretching direction of the polarizer and a stretching direction of the protective sheet are completely consistent, reduction in a polarization degree, local variation in a polarization degree and a color variation are generated, in some cases. In the case of a biaxially stretched protective sheet, a method of rendering a stretching direction in which a stretching ratio is greater, and a stretching direction of the polarizer approximately completely consistent is preferable.

It is necessary that the adhesive or the pressure-sensitive adhesive which adhere the polarizer and the protective sheet has long term durability for water, heat and light and, fundamentally, there is not a problem as long as it is the adhesive or the pressure-sensitive adhesive used in the first case of the first invention.

As an examples of the adhesive, there are an isocyanate compound, a polyurethane resin, a polythiourethane resin, an epoxy resin, a vinyl acetate resin, an acryl resin, and a wax. Examples of the pressure-sensitive adhesive include a vinyl acetate resin, and an acryl resin.

Upon adhesion, the adhesive or the pressure-sensitive adhesive is uniformly coated on a protective sheet or a polarizer, by a general coating method such as a gravure coating method and an offset coating method.

A thickness of the adhesive layer or the pressure-sensitive adhesive layer is usually 0.1 to 100 *µ*m, preferably 0.5 to 80 *µ*m. When a thickness of the adhesive layer or the pressure-sensitive adhesive layer is less than 0.1 *µ*m, a joining force is low and, when a thickness exceeds 100 *µ*m, the adhesive or the pressure-sensitive adhesive is bled out from an edge face of the polarizing plate.

A thickness of the polarizing plate is preferably 0.1 to 2 mm, more preferably 0.2 to 1.6 mm.

It is difficult to make a polarizing plate of less than 0.1 mm and, when a thickness exceeds 2 mm, there is a tendency that a polarizer is cracked, a protective sheet is wrinkled and, thus, the polarizing plate is not bended lens-like well, upon bending-processing of a polarizing plate.

A representative example of the polarizing plate includes a TAC (triacetylcellulose) polarizing plate. The TAC polarizing plate is such that a polyvinyl alcohol-based linear polarizer is held with two TAC sheets prepared by a cast-molding method. Particularly, a TAC polarizing plate having not sufficient thermal adherability with a backup resin is useful in the second case of the first invention.

Besides, a linear polarizing plate held with sheets having high optically uniformity such as a cycloolefin resin sheet, a polymethacryl resin sheet, and a polyurethane resin sheet is recommended.

Besides, the case where, of two protective sheets, at least one is a sheet having high optical uniformity such as an acyl cellulose sheet, particularly, a triacetylcellulose (TAC) sheet, a cycloolefin resin sheet, a polymethacryl resin sheet, and a polyurethane resin sheet, which has been cast-molded, and the other side is a sheet of a transparent thermoplastic resin such as a polycarbonate resin, a polyamide resin, a polyester resin, a polyurethane resin, a polyacryl resin, a polycycloolefin resin, a polystyrene resin, a polyvinyl chloride resin, a polystyrene methyl methacrylate resin, a polyacrylonitrile - styrene resin, a poly-4-methylpentene-1 resin, and an acylcellulose resin with a plasticizer added thereto, which has been extrusion-molded, is recommended.

In the second case of the first invention, a phase difference sheet or a phase difference plate which is adhered on one side of the linear polarizing plate may be the same as the phase difference sheet or the phase difference plate described in the first case of the first invention. In addition, the phase difference
sheet, or the phase difference plate is adhered on a side of a protective sheet having high optical uniformity of the linear polarizing plate.

A thermally adhering sheet to be adhered on the other side (side on which a phase difference sheet is not adhered) should be selected depending on the thermally adhering property with a backup resin, and a principle of the thermally adhering sheet described in the first case of the first invention is applied as it is.

That is, the thermally adhering sheet is a sheet made from a thermoplastic transparent resin such as a polycarbonate resin, a polyamide resin, a polyester resin, a polyurethane resin, a polyacryl resin, a polycycloolefin resin, a polystyrene resin, a polyvinyl chloride resin, a polystyrene-methyl methacrylate resin, a polyacrylonitrile-styrene resin, and a poly-4-methylpentene-1 resin.

Among them, from easiness of sheet manufacturing, any of a polycarbonate resin, a polyamide resin, a polyester resin, a polyacryl resin, a polycycloolefin resin, and a polyurethane resin is preferably used.

Since the thermally adhering sheet has thermally adhering adaptability with a backup resin, the case where resins of the thermally adhering sheet and backup are chemically cognatic resins, or any one of resins of the thermally adhering sheet and backup is a polyurethane resin having high thermal adherability, is preferable.

To these resins are added stabilizers such as ultraviolet absorbing agents and antioxidants in many cases.

It is not necessary that the thermally adhering sheet is monoaxially or biaxially stretched. Rather, since when not stretched, thermal shrinkage does not occur upon bending-processing or backup injection-molding, distortion is generated in the circularly polarizing lens with difficulty.

A thickness of the thermally adhering sheet is preferably around 0.01 to 1 mm, more preferably around 0.02 to 0.8 mm. There is a problem that when a thickness of the sheet is less than 0.01 mm, the circularly polarizing plate and the circularly polarizing lens become too thin, it is difficult to handle them and, when the thickness exceeds 1 mm, thickness balance between the phase different sheet is damaged, and warpage is easily generated in the circularly polarizing plate.

The adhesive or the pressure-sensitive adhesive used for adhering the phase difference sheet, or the phase difference plate and the thermal adhering sheet to the polarizer may be the same adhesive or pressure-sensitive adhesive as that described in the first case of the first invention.

When a TAC polarizing plate is used as the polarizing plate, as a backing up resin (herein also referred to as backup resin), it is recommended to use a thermoplastic resin such as a polycarbonate resin, a polyamide resin, and a polyester resin, since it has a high tensile strength and a high bending rigidity, strong toughness, and a great hardness. Since the thermal adherability between the backing up resin and the protective sheet made of TAC is not sufficient, it is recommended to adhere a thermally adhering sheet such as a polycarbonate resin, a polyamide resin, a polyester resin, and a polyurethane resin which can thermally adhere to the backup resin on the protective sheet made of TAC.

This is also true in the case of a linear polarizing plate other than the TAC polarizing plate, for example, a linear polarizing plate using, as a protective sheet, a cast-molded cycloolefin resin sheet, a polymethacryl resin sheet, and a polyurethane resin sheet.

Besides, even in the case of a linear polarizing plate in which, of two protective sheets, at least one is a sheet having high optical uniformity such as a case-molded acylcellulose sheet, particularly, a triacetylcellulose (TAC) sheet, a cycloolefin resin sheet, a polymethacryl resin sheet, and a polyurethane resin sheet, and the other side is a transparent thermoplastic resin sheet such as an extrusion-molded polycarbonate resin, a polyamide resin, a polyester resin, a polyurethane resin, a polyacryl resin, a polycycloolefin resin, a polystyrene resin, a polyvinyl chloride resin, a polystyrene·methyl methacrylate resin, a polyacrylonitrile·styrene resin, a poly-4-methylpentene-1 resin, and an acylcellulose resin with a plasticizer added thereto, a thermally adhering sheet is further adhered on an extrusion-molded transparent thermoplastic resin sheet which is to be a thermally adhering functional side, in some cases, in order to enhance the thermal adherability with the backing up resin.

The third case of the first invention is a circularly polarizing plate, characterized in that a phase difference
sheet having the phase difference function, or a phase difference plate is arranged on one of protective sheets of a linear polarizer, and the other protective sheet is a thermally adhering sheet having the thermally adhering function.

In the third case, the same polarizing plate as that of the second case is fundamentally used. As the phase difference sheet and the phase difference plate, the same sheet and plate as those of the first case or the second case are used.

An adhesive or a pressure-sensitive adhesive used for adhering the phase difference sheet or the phase difference plate on the polarizing sheet may be the same adhesive or the pressure-sensitive adhesive as that described in the first case or the second case of the first invention.

The third case is the case in which a protective sheet on a side of thermal adhesion has chemical affinity with a backing up resin, and both are thermally adhered well. The protective sheet and the backing up resin of this case should be selected according to the thermally adhering sheet and the backing up resin described in the second case.

The fourth case of the first invention is a circularly polarizing plate, characterized in that one of protective sheets of a linear polarizer is a phase difference
sheet having the phase difference function or a phase difference plate, and a thermally adhering sheet having the thermally adhering function is adhered on the other protective sheet.

In the fourth case, the same linear polarizing plate as that of the first case is fundamentally used. As the phase difference sheet and the phase difference plate, the same sheet and plate as those of the first case or the second case are used.

The fourth case is the case in which a protective sheet on a side of thermal adhesion has no chemical affinity with a backing up resin, and the protective sheet is thermally adhered to a backing up resin with difficulty. In this case, the thermally adhering sheet and the backing up resin to be adhered, should be selected according to the thermal adhering sheet and the backing up resin described in the second case.

An adhesive or a pressure-sensitive adhesive used in adhering the thermal adhering sheet may be the same adhesive or pressure-sensitive adhesive as that described in the first case or the second case of the first invention.

The fifth case of the first invention is a circularly polarizing plate in which the thermal adhering function is complemented by a coating layer for thermal adhesion, which is provided on a thermal adhesion side.

That is, the thermal adherability between the thermal adhering functional part and the backing up resin is complemented by the coating layer for thermal adhesion.

Further, to specifically describe the first to fourth cases of the first invention, those cases can be attained by providing a coating layer for thermal adhesion on the thermally adhering sheet of the first to fourth cases.

Examples of a resin used in such the coating layer for thermal adhesion include a polyurethane resin, a polythiourethane resin, an epoxy resin, a polyvinyl acetate resin, a polyacryl resin, a polyester resin, a polyolefin resin, and a synthetic rubber, and a low viscosity product is used as it is, or a high viscosity product or a solid is used by dissolving in a solvent, or by formulating into an emulsion.

These coating layers for thermal adhesion are uniformly coated on a thermally adhering sheet by a general coating method such as a gravure coating method and an offset coating method.

A thickness of the coating layer for thermal adhesion is usually 0.1 to 500 *µ*m, preferably 0.5 to 400 *µ*m. When a thickness of the coating layer for thermal adhesion is less than 0.1 µm, an adhering force is low and, when the thickness exceeds 500 µm, the coating layer for thermal adhesion is bled out, or protruded from an edge face of the circularly polarizing lens when the backing up resin is injection-molded.

The second aspect of the present invention (hereinafter, referred to as second invention) relates to the formulation of the clockwise or counterclockwise circularly polarizing plate disclosed in the case 1 to the case 5 of the first invention into a clockwise or counterclockwise circularly polarizing lens.

The circularly polarizing plate of the present invention is usually manufactured as a planar laminate sheet in which planar sheets such as a polarizer, a protective sheet and a phase difference sheet are laminated.

In order to prepare such the planar laminate sheet into a clockwise or counterclockwise circularly polarizing lens of the present invention, the sheet is shaped into a lens shape such as a circular shape, an elliptic shape, a long elliptic shape, an oval gold coin shape, a polyangular shape such as a tetragonal shape, and a pentagonal shape, a polyangular shape having rounded corners, an eggplant shape, and a drop shape, by a method of punching, cutting, or polishing the clockwise or counterclockwise circularly polarizing plate. The manufactured lens is a planar clockwise or counterclockwise circularly polarizing lens.

It is preferable that the clockwise or counterclockwise circularly polarizing lens of the present invention is bending-processed so that wrap and rake are great when manufactured into glasses. Examples of a shape of bending-processing include a spherical shape, and a toric shape.

As the bending-processing method, there are various methods as explained below. It is usual that the circularly polarizing plate before bending-processing is cut into such a shape and size so that the sheet is easily mounted on a bending-processing apparatus.

As one of methods of bending-processing a circularly polarizing plate, there is a blow-molding method. This method uses a bending apparatus in which a depression having a diameter approximately equal to that of a lens is provided. With a phase difference functional side of the circularly polarizing plate upwards, the circularly polarizing plate is placed on a depression, and a ring-like fixing bracket having a shape which is equal to an outer circumference of a depression is pushed thereon. The circularly polarizing plate is fixed on the bending apparatus with a ring-like fixing bracket.

An electric heater or an ultraviolet heater is held from an upper side to heat and soften the circularly polarizing plate so that it is easily softened.

When the circularly polarizing plate reaches a predetermined temperature, the pressurized air is introduced into the interior of a depression, followed by pressurization from the interior. As a result, the circularly polarizing plate is inflated upwards, and is deformed into a lens shape.

At the timepoint when the plate has inflated to an objective shape, heating with a heater is stopped and, at the same time, interior pressurization is stopped. Pushing of a ring-like fixing bracket is loosened, and the circularly polarizing plate which has been bending-processed is taken out from the bending apparatus. If necessary, when unnecessary parts of the circularly polarizing plate are cut off, a circularly polarizing lens in which a phase difference functional side is arranged on a convex side, and a thermally adhering functional side is arranged on a concave side is obtained.

As another method of bending-processing a circularly polarizing plate, there is a vacuum-molding method. In this method, a method of fixing, and a method of heating a circularly polarizing plate are approximately the same format as that of a blowing-molding method, but a different point is that a circularly polarizing plate is placed on a bending apparatus with a phase difference functional part downwards.

When the circularly polarizing plate reaches a predetermined temperature, a depression part is depressurized from the interior. As a result, the circularly polarizing plate is retracted, and deformed into a lens.

At the timepoint when sucked down to an objective shape, heating with a heater is stopped and, at the same time, depressurization is stopped. Pushing of a ring-like fixing bracket is loosened, and the circularly polarizing plate which has been bending-processed is taken out from the bending apparatus. If necessary, when unnecessary parts of the circularly polarizing plate are cut off, a circularly polarizing lens in which a phase difference functional part becomes a convex surface, and a thermally adhering functional side becomes a concave surface is obtained.

As another method of bending-processing the circularly polarizing plate, there is a pressure vacuum-molding method. This method technically integrates a blow-molding method and a vacuum-method.

A pressurizing chamber (or a depressurizing chamber) is provided at an upper part of the circularly polarizing plate fixed with a ring-like fixing bracket, and a depressurizing chamber (or a pressurizing chamber) is provided at a lower part, and pressurization and depressurization are performed at the same time, thereby, deformation is easily performed by addition of inflation deformation on a pressurizing side and retraction deformation on a depressurizing side. The circularly polarizing plate is set on the apparatus so that a phase difference functional side is on a convex surface.

The blow-molding method, the vacuum-molding method, and the pressure vacuum-molding method are effective in bending-processing of a circularly polarizing plate having a thickness of around 0.2 mm, but for a circularly polarizing plate having a greater thickness, a thickness variation is generated, a wrinkle is generated, and cracking occurs at a bending-processed part.

Such the thickness variation, wrinkle and cracking lead to local elongation of a phase difference sheet and a linear polarizer, and the sufficient circularly polarizing performance is not obtained.

Then, a method of bending-processing a circularly polarizing plate so that a thickness variation, a wrinkle and cracking do not occur at a bending-processed part becomes important and, as other method of bending-processing a circularly polarizing plate, there is the method shown in JP-A No. 1-22538 (in the present invention, this method is referred to as suction-type free bending-processing method).

The suction-type free bending-processing method does not use a ring-like fixing bracket used in the blow-molding method, the vacuum-molding method, and the pressure vacuum-molding method, but is formally similar to the vacuum-molding method.

That is, a circularly polarizing plate is placed on a mold which becomes depressed in a shape of curvature approximately equal to a bended shape, without fixation plate. An atmospheric temperature and a mold temperature are set at a bending-processing temperature and, when a pressure is reduced from a bottom of a mold, the circularly polarizing plate is retracted into the mold until it has the same shape as that of the mold.

After the atmospheric temperature and the mold temperature are lowered to a certain temperature, the circularly polarizing lens is taken out from the mold.

The suction-type free bending-processing method has a problem that, in bending-processing of a circularly polarizing plate having a thickness of around 0.2 mm or less, a wrinkle is generated, and a good-quality circularly polarizing lens is obtained with difficulty, but for a circularly polarizing plate having a thickness of 0.2 mm or more, there is an advantage that the plate can be bending-processed relatively smoothly. This is a method which is particularly recommended for obtaining the circularly polarizing lens of the second invention of the present invention.

In clockwise and counterclockwise circularly polarizing lenses made in line with the second invention of the present invention, a lens surface can be hard coating-processed. A hard coating is generally thermally curable hard coating such as silane-based and epoxy-based coating, and active ray curable hard coating such as acryl-based and epoxy-based coating.

The third aspect of the present invention (hereinafter, referred to as third invention) relates to a circularly polarizing lens, characterized in that a backup resin is injection-molded on a thermally adhering functional part of clockwise and counterclockwise circularly polarizing lenses disclosed in the second invention.

A method of injection-molding the backup resin is a so-called insert injection-molding method in which the circularly polarizing lens obtained in the second invention is inserted into a mold of an injection-molding machine, and the backup resin is injection-molded on a thermally adhering functional side (which is often to be a concave side).

From a view point of productivity and accuracy of molding, the insert injection-molding method shown in JP-A No. 11-245259 is fundamentally preferable.

That is, the method is a method of arranging a circularly polarizing lens in a mold with a surface to be thermally adhered towards a side of backing up, and a backing up resin layer is insert injection-molded. Inter alia, since the injection compression-molding method takes a method of injecting a resin into a mold at a low pressure, thereafter, closing the mold with a high pressure to add a compression force to the resin, optical anisotropy due to molding distortion and local orientation of a resin mold is generated in a molded article, with difficulty. In addition, since a resin can be cooled by a constant specific volume by controlling a mold compressing force which is uniformly applied to the resin, a molding article having high dimensional precision is obtained.

Besides, the third invention includes a circularly polarizing single-type lens for stereoscopic viewing, which was made by arranging the clockwise circularly polarizing lens and the counterclockwise circularly polarizing lens made in the second invention in line (the state of arrangement in line in this case includes the state where both lenses are slightly overlapped and arranged, or the state where an end is arranged under contact, or the state where an end is arranged at an interval), injection-molding the backup resin on a thermally adhering functional part at the same time, thereby, arranging the clockwise circularly polarizing lens and the counterclockwise circularly polarizing lens in line, or a circularly polarizing single-type lens for stereoscopic viewing, in which a frame and a lens are integrated, or a circularly polarizing single-lens goggle lens for stereoscopic viewing, in which a frame and a lens are integrated.

In any case, a single-type lens mold in which insertion can be performed in the state where the clockwise circularly polarizing lens and the counterclockwise circularly polarizing lens of the second invention are arranged in line is used.

The clockwise circularly polarizing lens and the counterclockwise circularly polarizing lens of the second invention are backup-molded at the same time, and both lenses are connected with the backing up resin, to obtain a circularly polarizing single-type lens for stereoscopic viewing.

Further, when a frame is molded with a backing up resin simultaneously at a periphery of both lenses, a circularly polarizing single-type lens for stereoscopic viewing, in which a frame and lens are integrated is obtained. Further, when a frame is molded with a backing up resin simultaneously at a periphery of both lenses, a circularly polarizing single-lens goggle lens for stereoscopic viewing, in which a frame and a lens are integrated, is obtained.

Upon backup injection-molding, in order to fix, in a mold, the circularly polarizing lens of the second invention to be inserted, suction fixation of the circularly polarizing lens of the second invention is frequently performed from a mold side through a suction pore provided in a mold.

It is preferable that a bended shape of the circularly polarizing lens of the second invention is approximately equal to a shape of a mold. That is, when the circularly polarizing lens of the second invention has a planer shape, a mold also having a planer shape is used and, when the circularly polarizing lens of the second invention has a spherical surface, as a mold, a mold having a spherical surface approximately equal thereto is used.

When the circularly polarizing lens of the second invention has a planar shape, by suction-fixation in a mold, the lens is bended along a shape (e.g. spherical shape, elliptic spherical shape or toric shape) of a mold, a circularly polarizing lens which is backed up with a shape thereof, and has a spherical shape, an elliptic spherical shape or a toric shape can be made, but there is a tendency that finish of a lens after backing up is not good, as compared with the case where the circularly polarizing lens of the second invention which has been bending-processed in advance is set in a mold having a spherical shape, an elliptic spherical shape or a toric shape approximately equal thereto, and backup injection-molding is performed.

Since the backing up resin is required to thermally adhere with the circularly polarizing lens of the second invention, it is preferable that a resin used in the thermally adhering sheet and the backing up resin are chemically cognatic.

That is, when the protective sheet is a polycarbonate resin, as the backing up resin, a polycarbonate resin is preferable, when the protective sheet is a polyamide resin, a polyamide resin is preferable, when the protective sheet is a polyester resin, a polyester resin is referable, when the protective sheet is a polyacryl resin, a polyacryl resin is preferable, when the protective sheet is a polycycloolefin resin, a polycycloolefin resin is preferable and, when the protective sheet is a polyurethane resin, a polyurethane resin is preferable.

When the backing up resin is a polycarbonate resin, it is thermally adhered to a thermally adhering sheet made of a polyester resin, in some cases.

In addition, when the backing up resin is a polyester resin, it is thermally adhered to a thermally adhering sheet made of a polycarbonate resin, in some cases.

In addition, when the backing up resin is a polyurethane resin, it is thermally adhered to thermally adhering sheets having many chemical structures, in some cases, being not limited to a polyurethane resin.

In addition, when the thermally adhering function is complemented by the coating layer for thermal adhesion such as disclosed in the fourth case of the present invention, a chemical species of the backing up resin is not limited, or is not limited except for a part thereof in some cases.

When a circularly polarizing lens having a thickness which has been increased by backing up of a resin has the same thickness over a lens whole region, it is a lens without correction degree, so-called planolens. In the planolens, as a thickness of the lens grows, a refracting power of a minus side is generated in a vision line of a lens end, and a distorted visual sense is easily generated. As strategy therefor, it is preferable that, by optical design of shifting a center of a front curve and a center of a back curve of a spherical lens and a toric lens, and changing a curvature radius, a thickness is gradually reduced towards a lens edge face, a refracting power of a plus side is imparted, and a refracting force on a minus side is cancelled.

In the case of the planolens, a central thickness of a lens after molding of the backup resin is recommended to be around 0.7 to 3 mm, preferably 0.8 to 2.8 mm. When the thickness is less than 0.7 mm, insert injection-molding is difficult, and the reinforcing effect to an impact resistance strength is not sufficient, in some cases. On the hand, when the thickness exceeds 3 mm, a lens becomes heavy and, there is a tendency that, when prepared into glasses, an end of the lens becomes thick, and appearance is not good.

In addition, by changing a front curve curvature of the circularly polarizing lens made in line with the second invention, and a back curve curvature of the circularly polarizing lens after backing up, a circularly polarizing correction lens with a degree on a plus side or a minus side can be made.

In addition, a so-called semifinish lens (abbreviated as semilens, in some cases) can be made and, by polishing a minus side or a plus side of a backing up resin part, a circularly polarizing correction lens can be made.

In the circularly polarizing lens, as well as the circularly polarizing single-type lens for stereoscopic viewing, as well as the circularly polarizing single-lens glasses-type lens for stereoscopic viewing, made in line with the third invention of the present invention, a lens surface can be hard coating-processed. As the hard coating, a thermally curable hard coating such as silane-based, and epoxy-based coating, and active ray curable hard coating such as acryl-based and epoxy-based coating are general.

The hard coating is usually imparted at a film thickness of around 0.5 to 15 *µ*m and, for the purpose of improving adherability and impact resistance, a primer coating layer such as acrylate--based and urethane-based coating layer is provided on a lens surface, and a hard coating layer is provided on the primer coating layer.

In addition, the circularly polarizing lens, as well as the circularly polarizing single-type lens for stereoscopic viewing, as well as the circularly polarizing single-lens goggle lens for stereoscopic viewing of the third invention of the present invention are subjected to reflection preventing processing or anti-fogging processing, in some cases.

The fourth aspect of the present invention (hereinafter, referred to as fourth invention) relates to a circularly polarizing twin-lens glasses for stereoscopic viewing, or a circularly polarizing twin-lens goggle for stereoscopic viewing, in which the phase difference functional part (which is often to be a convex side) of the circularly polarizing lens disclosed in the second invention and the third invention of the present invention is placed in a frame as an object side, and the thermally adhering functional part or the backup resin side (which is often to be a concave side) is placed in a frame as an eye side.

A shape and a type of a twin-lens glasses frame, or a twin-lens goggle frame into which the circularly polarizing lens is fitted, are not particularly limited, but firm fixation of the lens is preferable.

It is a cardinal rule that placement in a frame is such that a clockwise circularly polarizing lens is placed in a frame for one eye, and a counterclockwise circularly polarizing lens is placed in a frame for another eye.

Herein, when a circularly polarizing lens is placed in a glasses frame so that a transmission axis direction of a linear polarizer becomes a horizontal direction (a direction connecting two lenses is let to be a horizontal direction of glasses), the case of a slow axis direction of a phase difference sheet being inclination connecting ten o'clock and a half and four o'clock and a half of a hour hand of a horologe seen from a front direction (or a phase difference functional part side) becomes a clockwise circularly polarizing lens, and the case of a slow axis direction of the phase difference sheet being inclination connecting one o'clock and a half and seven o'clock and a half of a hour hand of a horologe becomes a counterclockwise circularly polarizing lens.

The fourth invention includes, besides, a circularly polarizing single-lens glasses for stereoscopic viewing, in which a circularly polarizing single-type lens for stereoscopic viewing in which the clockwise circularly polarizing lens and the counterclockwise circularly polarizing lens made in the third invention are arranged in line, is fitted as an optical part, and a circularly polarizing single-lens glasses for stereoscopic viewing, in which a circularly polarizing single-lens glasses-type lens for stereoscopic viewing in which a frame and a lens are integrated, is fitted as an optical part.

Besides, the fourth invention includes a circularly polarizing single-lens goggle for stereoscopic viewing, in which a circularly polarizing single-lens goggle lens for stereoscopic viewing in which a clockwise circularly polarizing lens and a counterclockwise circularly polarizing lens are arranged in line, is used as an optical part, and a belt etc. is installed therein.

### Examples

Example 1
As a linear polarizer, a sheet of polyvinyl alcohol was stretched 4-fold in a monoaxial direction to obtain a sheet having a thickness of about 30 *µ*m, which was further stained with a dichroic dye to obtain a polyvinyl alcohol-based linear polarizer having a polarization degree of 98%.

As a thermally adhering sheet, a polycarbonate resin (manufactured by Teijin Chemicals, Ltd., Penlite L-1250Z) having a viscosity average molecular weight of approximately 25000 was extrusion-molded to prepare a transparent sheet having a thickness of around 0.3 mm.

A urethane-based adhesive was coated on one side of a thermally adhering sheet made of a polycarbonate resin at a thickness of around 25 *µ*m, and the previously prepared polyvinyl alcohol linear polarizer was overlapped and adhered.

Then, a urethane-based adhesive was coated on another side of the linear polarizer at a thickness of around 25 *µ*m, and a polycycloolefin-based 1/4λ phase difference sheet (thickness 46 *µ*m, manufactured by MeCan Imaging Co.) was overlapped and adhered.

Upon overlapping, an angle between a stretching direction of the linear polarizer and a stretching direction of the phase difference sheet was set to be 45 degree so that clockwise circular polarization was obtained, and a clockwise circularly polarizing plate was prepared.

Similarly, an angle between a stretching direction of the linear polarizer and a stretching direction of the phase difference sheet was set to be 45 degree so that counterclockwise circular polarization was obtained, and a counterclockwise circularly polarizing plate was prepared.

The resulting clockwise circularly polarizing plate and counterclockwise polarizing plate had a thickness of around 0.43 mm.

Example 2
The phase difference sheet used in Example 1 was adhered on one side of a triacetylcellulose (TAC) polarizing plate (thickness about 0.23 mm; polarization degree 99.5%; polarizing plate obtained by holding both sides of a linear polarizer made of polyvinyl alcohol having a thickness of about 30 *µ*m, which had been doped with a dichroic dye, with protective sheets made of TAC having a thickness of about 100 *µ*m, which had been prepared by cast-molding, followed by adhesion with an adhesive; manufactured by Sumitomo Chemical Co., Ltd.), as in Example 1.

The thermally adhering sheet made of a polycarbonate resin used in Example 1 was adhered on another side of the TAC polarizing plate, as in Example 1.

Both of the resulting clockwise circularly polarizing plate and counterclockwise circularly polarizing plate had a thickness of around 0.55 mm.

Example 3
The phase difference sheet used in Example 1 was adhered on one side of the TAC polarizing plate used in Example 1, as in Example 1.
As a thermally adhering sheet, transparent nylon ("TROGAMID" CX-7323, manufactured by HULS) was extrusion-molded to prepare a transparent sheet having a thickness of around 0.3 mm.

The thermally adhering sheet made of transparent nylon was adhered on another side of the TAC polarizing plate, as in Example 1.

Both of the resulting clockwise circularly polarizing plate and counterclockwise circularly polarizing plate had a thickness of around 0.55 mm.

Example 4
A protective sheet made of TAC having a thickness of about 100 *µ*m, which had been prepared by cast-molding, was adhered on the linear polarizer used in Example 1, as in Example 1. Further, the polycarbonate resin sheet used in Example 1 as a protective sheet having thermal adherability was adhered on another side of the linear polarizer, as in Example 1. The resulting laminate is a linear polarizing plate having a polarization degree of 98%, and a thickness of about 0.48 mm.

The phase difference sheet used in Example 1 was adhered on the protective sheet made of TAC of the resulting linear polarizing plate.

Both of the resulting clockwise circularly polarizing plate and counterclockwise circularly polarizing plate were such that one side was a phase difference sheet, and another side was a polycarbonate resin sheet having thermal adherability, and had a thickness of about 55 mm.

Example 5
A phase difference plate (obtained by adhering a protective sheet made of TAC on both sides of a 1/4λ phase difference sheet having a thickness of about 46 *µ*m, made of a polycycloolefin-based resin; manufactured by MeCan Imaging Co.) was overlapped on the protective sheet made of TAC of the linear polarizing plate prepared in Example 4, followed by adhesion as in Example 1.

Both of the resulting clockwise circularly polarizing plate and counterclockwise circularly polarizing plate were such that one side is a phase difference plate, and another side is a polycarbonate resin sheet having thermal adherability, and had a thickness of around 0.8 mm.

Example 6
As a protective sheet, an acryl-based adhesive was coated on a polymethyl methacrylate resin sheet having a thickness of about 200 *µ*m, which had been prepared by inter-plate polymerization, at a thickness of about 25 *µ*m and this was adhered on one side of the polyvinyl alcohol-based linear polarizer used in Example 1.

Then, a polymethyl methacrylate resin sheet having a thickness of about 200 *µ*m, which had been similarly prepared by inter-plate polymerization, was adhered on another side of the polyvinyl alcohol-based linear polarizer.

The obtained is a polyacryl polarizing plate having a thickness of about 0.48 mm, in which a polymethyl methacrylate resin sheet is adhered on both sides of the polyvinyl alcohol-based linear polarizer.

The phase difference sheet used in Example 1 was adhered on one side of the same polarizing plate as in Example 1, to prepare clockwise and counterclockwise circularly polarizing plates. A thickness of the resulting circularly polarizing plates is about 0.55 mm.

An isopropyl alcohol solution of cross-linking urethane acrylate (pentaerythritol triacrylate hexamethylene diisocyanate urethane prepolymer; urethane acrylate UA-306H of KYOEISHA CHEMICAL CO., LTD.) was coated on a thermally adhering functional side (polymethyl methacrylate resin side) of the same circularly polarizing plate.

After coating, this was placed in a hot air oven to remove isopropyl alcohol, to form a cross-linking urethane acrylate layer. Then, the cross-linking urethane acrylate layer was irradiated with ultraviolet ray to prepare a coating method for thermal adhesion. A thickness of the coating layer for thermal adhesion is 35 *µ*m.

Example 7
As a circularly polarizing plate, a clockwise circularly polarizing plate and a counterclockwise circularly polarizing plate manufactured by POLATECHNO CO., LTD. (both had a thickness of about 0.3 mm; the same circularly polarizing plate was obtained by laminating and adhering 1/4λ phase difference sheet made of polycarbonate/protective sheet made of TAC/polyvinyl alcohol-based linear polarizer doped with iodine/protective sheet made of TAC in this order) was used.

As a thermally adhering sheet, the polymethyl methacrylate resin sheet used in Example 6 was used. The same polymethyl methacrylate resin sheet coated with an acryl-based adhesive at a thickness of about 25 *µ*m was adhered on a side of the protective sheet made of TAC of the circularly polarizing plate.

Both of the resulting clockwise circularly polarizing plate and counterclockwise circularly polarizing plate had a thickness of around 0.53 mm.

Example 8
Each of the clockwise and counterclockwise circularly polarizing plates prepared in Example 1 was punched into a circle having a diameter of 90 mm.

The circularly punched circularly polarizing plate was placed in a hot air dryer at 70°C for 5 hours to drying-treat it. Then, the plate was set in a suction-type free bending-processing apparatus equipped with a mold having a curvature radius of 87 mm, so that a convex surface became a phase difference functional side, and a concave surface became a thermally adhering functional side. The suction-type free bending-processing apparatus was such that a mold temperature was set at 125°C in advance.

The circularly polarizing plate was set in the suction-type free bending-processing apparatus and, at the same time, was sucked from a mold side under reduced pressure. In that state, the plate was placed in a hot air oven at 130°C, and was sucked under the condition of 0.05 MPa. After approximately 10 minutes, the plate was taken out from the hot air oven, and suction under reduced pressure was stopped.

The bending-processed lens was taken out from the mold, and a flange-like peripheral part was cut off. The resulting lenses were clockwise and counterclockwise circularly polarizing lenses having a curvature radius of about 87 mm, in which a convex surface became a phase difference functional side, and a concave surface became a thermally adhering functional side.

Example 9
Each of the clockwise and counterclockwise circularly polarizing plates prepared in Example 2 was punched into a circle having a diameter of 90 mm.

As in Example 8, clockwise and counterclockwise circularly polarizing lenses having a curvature radius of about 87 mm, in which a convex surface became a phase difference functional side, and a concave surface became a thermally adhering functional side, were prepared.

Example 10
Each of the clockwise and counterclockwise circularly polarizing plates prepared in Example 3 was punched into a circle having a diameter of 90 mm.

According to the same manner as that of Example 8 except that a mold temperature was 100°C, and a hot air oven temperature was 115°C, bending-processing was performed to prepare clockwise and counterclockwise circularly polarizing lenses.

Example 11
Each of the clockwise and counterclockwise circularly polarizing plates prepared in Example 4 was punched into a circle having a diameter of 90 mm.

As in Example 8, clockwise and counterclockwise circularly polarizing lenses having a curvature radius of about 87 mm, in which a convex surface became a phase difference functional side, and a concave surface became a thermally adhering functional side, were prepared.

Example 12
Each of the clockwise and counterclockwise circularly polarizing plates prepared in Example 5 was punched into a circle having a diameter of 90 mm.

As in Example 8, clockwise and counterclockwise circularly polarizing lenses having a curvature radius of about 87 mm, in which a convex surface became a phase difference functional side, and a concave surface became a thermally adhering functional side, were prepared.

Example 13
Each of the clockwise and counterclockwise circularly polarizing plates prepared in Example 6 was punched into a circle having a diameter of 90 mm.

According to the same manner as that of Example 8 except that a mold temperature was 90°C, and a hot air oven temperate was 95°C, bending-processing was performed to prepare clockwise and counterclockwise circularly polarizing lenses having a curvature radius of about 87 mm, in which a convex surface became a phase difference functional side, and a concave surface became a thermally adhering functional side.

Example 14
Each of the clockwise and counterclockwise circularly polarizing plates prepared in Example 7 was punched into a circle having a diameter of 90 mm.

According to the same manner as that of Example 8 except that a mold temperature was 90°C, and a hot air oven temperate was 95°C, bending-processing was performed to prepare clockwise and counterclockwise circularly polarizing lenses having a curvature radius of about 87 mm, in which a convex surface became a phase difference functional side, and a concave surface became a thermally adhering functional side.

Example 15
A mold of 6 C (curve) for insert molding, that is, having a curvature radius of 87 mm was attached in a molding chamber of an injection-molding machine.

The molding chamber was opened, the circularly polarizing lens prepared in Example 8 was inserted, with a convex side at the forefront, into a mold on a convex side, suction under reduced pressure was performed through fine pores provided in a mold on a convex side, and the circularly polarizing lens was fixed in a mold on a convex side.

The molding chamber was closed, a polycarbonate resin (viscosity average molecular weight 25000; manufactured by Teijin Chemicals, Ltd.; Panlite L-1250Z) was injection-molded into a concave side (thermally adhering functional side) of the circularly polarizing lens, to make clockwise and counterclockwise circularly polarizing planolenses having a diameter of 86 mm and a central thickness of 2 mm.

Example 16
As in Example 15, a polycarbonate resin was injection-molded on a thermally adhering side of the circularly polarizing lenses prepared in Example 9 to make clockwise and counterclockwise circularly polarizing planolenses having a diameter of 86 mm and a central thickness of 2 mm.

Example 17
As in Example 15, transparent nylon ("TROGAMID" CX-7323, manufactured by HULS) was injection-molded on a thermally adhering side of the circularly polarizing lenses prepared in Example 10, to make clockwise and counterclockwise circularly polarizing planolenses having a diameter of 86 mm, and a central thickness of 2 mm.

Example 18
As in Example 15, a polycarbonate resin was injection-molded on a thermally adhering side of the circularly polarizing lenses prepared in Example 11, to make clockwise and counterclockwise circularly polarizing semilenses having a diameter of 86 mm, and a central thickness of 10 mm.

Example 19
As in Example 15, a polycarbonate resin was injection-molded on a thermally adhering side of the circularly polarizing lenses prepared in Example 12, to make clockwise and counterclockwise circularly polarizing planolenses having a diameter of 86 mm, and a central thickness of 2 mm.

Example 20
As in Example 15, a polyurethane resin (manufactured by BASF, ELASTOLLAN ET595) was injection-molded on a thermally adhering side of the circularly polarizing lenses prepared in Example 13, to make clockwise and counterclockwise circularly polarizing planolenses having a diameter of 86 mm and a central thickness of 2 mm.

Example 21
As in Example 15, a polymethyl methacrylate resin (manufactured by Sumitomo Chemical Co., Ltd., SUMIPEX MGSS) was injection-molded on a thermally adhering side of the circularly polarizing lenses prepared in Example 14, to make clockwise and counterclockwise circularly polarizing planolenses having a diameter of 86 mm and a central thickness of 2 mm.

Example 22
Regarding clockwise and counterclockwise circularly polarizing lenses prepared in Examples 8 to 14, a peripheral part was polished with a lens cutting machine so as to be consistent with a glasses frame shape, for every Example.

A clockwise circularly polarizing lens and a counterclockwise circularly polarizing lens were paired, for every Example. Paired clockwise circularly polarizing lens and counterclockwise circularly polarizing lens were placed into a glasses frame so that a convex surface was on an object side, and a concave surface was on an eye side.

The finished glasses were circularly polarizing glasses in which each single lens of the clockwise circularly polarizing lens and the counterclockwise circularly polarizing lens was fitted therein.

When one wore the circularly polarizing glasses after preparation on eyes, and viewed an interleave filter-type stereoscopic television, stereoscopic viewing was good for any glasses.

Example 23
As a linear polarizer, a sheet of polyvinyl alcohol was stretched 4-fold in a monoaxial direction to obtain a sheet having a thickness of about 30 *µ*m, which was further stained with a dichroic dye to obtain a polyvinyl alcohol-based linear polarizer having a polarization degree of 98%.

As a thermally adhering sheet, a polycarbonate resin (manufactured by Teijin Chemicals, Ltd., Panlite L-1250Z) having a viscosity average molecular weight of approximately 25000 was extrusion-molded to prepare a transparent sheet having a thickness of around 0.3 mm.

A urethane-based adhesive was coated on one side of a thermally adhering sheet made of a polycarbonate resin at a thickness of around 25 *µ*m, and the previously prepared polyvinyl alcohol-based linear polarizer was overlapped thereon and adhered.

Then, a urethane-based adhesive was coated on another side of the linear polarizer at a thickness of around 25 *µ*m, and a polycarbonate-based 1/4λ phase difference sheet (thickness 60 *µ*m, GS-120 manufactured by Teijin Chemicals, Ltd.) was overlapped thereon and adhered.

Upon overlapping, an angle between a stretching direction of the linear polarizer and a stretching direction of the phase difference sheet was set to be 45 degree so that clockwise circular polarized light was obtained, to prepare a clockwise circularly polarizing plate.

Similarly, an angle between a stretching direction of the linear polarizer, and a stretching direction of the phase difference sheet was set to be 45 degree so that counterclockwise circular polarized light was obtained, to prepare a counterclockwise circularly polarizing plate.

Both of the resulting clockwise circularly polarizing plate and counterclockwise circularly polarizing plate had a thickness of around 0.43 mm.

Example 24
A urethane-based adhesive was coated on one side of a triacetylcellulose (TAC) polarizing plate (thickness about 0.23 mm; polarization degree 99.5%; a plate obtained by holding both sides of a linear polarizer made of polyvinyl alcohol having a thickness of about 30 *µ*m, which had been doped with a dichroic dye, with protective sheets made of TAC having a thickness of about 100 *µ*m, which had been prepared by cast-molding, followed by adhesion with an adhesive; manufactured by Sumitomo Chemical Co., Ltd.), at a thickness of around 25 *µ*m, and a 1/4λ phase difference sheet (thickness 70 *µ*m) made of polyamide (glass transition temperature is approximately 165°C) was adhered thereon.

The thermally adhering sheet made of a polycarbonate resin used in Example 23 was adhered on another side of the TAC polarizing plate, as in Example 23.

Both of the resulting clockwise circularly polarizing plate and counterclockwise circularly polarizing plate had a thickness of around 0.63 mm.

Example 25
The phase difference sheet used in Example 23 was adhered on one side of the TAC polarizing plate used in Example 24, as in Example 23.

As a thermally adhering sheet, transparent nylon ("TROGAMID" CX-7323, manufactured by HULS) was extrusion-molded to prepare a transparent sheet having a thickness of around 0.3 mm.

The thermally adhering sheet made of transparent nylon was adhered on another side of the TAC polarizing plate, as in Example 23. Both of the resulting clockwise circularly polarizing plate and counterclockwise circularly polarizing plate had a thickness of around 0.6 mm.

Example 26
A protective sheet made of TAC having a thickness of about 100 *µ*m, which had been prepared by cast-molding, was adhered on the linear polarizer used in Example 23, as in Example 23. Further, the polycarbonate resin sheet used in Example 1 as a protective sheet having thermal adherability was adhered on another side of the linear polarizer, as in Example 23. The resulting laminate is a linear polarizing plate having a polarization degree of 98%, and a thickness of about 0.48 mm.

The phase difference sheet used in Example 23 was adhered on the resulting protective sheet made of TAC of a linear polarizing plate, as in Example 23.

Both of the resulting clockwise circularly polarizing plate and counterclockwise circularly polarizing plate were such that one side was a phase difference sheet, and another side was a polycarbonate resin sheet having thermal adherability, and had a thickness of about 0.58 mm.

Example 27
A phase difference plate having a thickness of about 0.3 mm (obtained by adhering a protective sheet made of TAC on both sides of a 1/4λ phase difference sheet having a thickness of about 46 *µ*m, made of a polycycloolefin-based resin; manufactured by MeCan Imaging Co.) was overlapped on the protective sheet made of TAC of a linear polarizing plate used in Example 26, and was adhered as in Example 23.

Both of the resulting clockwise circularly polarizing plate and counterclockwise circularly polarizing plate were such that one side was a phase difference plate, and another side was a polycarbonate resin sheet having thermal adherability, and had a thickness of around 0.8 mm.

Example 28
As a protective sheet, an acryl-based adhesive was coated on a polymethyl methacrylate resin sheet having a thickness of about 200 *µ*m, which had been prepared by inter-plate polymerization, at a thickness of about 25 *µ*m, and this was adhered on one side of the polyvinyl alcohol-based linear polarizer used in Example 23.

Then, a polymethyl methacrylate resin sheet having a thickness of about 200 *µ*m, which had been prepared by inter-plate polymerization similarly, was adhered on another side of the polyvinyl alcohol-based linear polarizer.

The resulting is a polyacryl polarizing plate having a thickness of about 0.48 mm, in which a polymethyl methacrylate resin sheet is adhered on both sides of the polyvinyl alcohol-based linear polarizer.

The phase difference sheet used in Example 23 was adhered on one side of the same polarizing plate as in Example 23, to prepare clockwise and counterclockwise circularly polarizing plates. A thickness of the resulting circularly polarizing plates is about 0.55 mm.

An isopropyl alcohol solution of cross-linking urethane acrylate (pentaerythritol triacrylate hexamethylene diisocyanate urethane prepolymer; urethane acrylate UA-306H of KYOEISHA CHEMICAL CO., LTD) was coated on a thermally adhering functional side (polymethyl methacrylate resin side) of the same circularly polarizing plate.

After coating, this was placed in a hot air oven to remove isopropyl alcohol, to form a cross-linking urethane acrylate layer. Then, the cross-linking urethane acrylate layer was irradiated with ultraviolet ray to prepare a coating layer for thermal adhesion. A thickness of the coating layer for thermal adhesion is 35 *µ̅*m.

Example 29
As a circularly polarizing plate, the clockwise circularly polarizing plate and the counterclockwise circularly polarizing plate (both have a thickness of about 0.3 mm; the same circularly polarizing plate obtained by lamination and adhesion in an order of 1/4λ phase difference sheet made of polycarbonate/protective sheet made of TAC/polyvinyl alcohol-based linear polarizer doped with iodine/protective sheet made of TAC in this order was used) manufactured by POLATECHNO CO., LTD were used.

As a thermally adhering sheet, the polymethyl methacrylate resin sheet used in Example 28 was used. The same polymethyl methacrylate resin sheet on which an acryl-based adhesive had been coated at a thickness of about 25 *µ*m was adhered on a side of the protective sheet made of TAC of the circularly polarizing plate.

Both of the resulting clockwise circularly polarizing plate and counterclockwise circularly polarizing plate had a thickness of around 0.53 mm.

Example 30
Each of clockwise and counterclockwise circularly polarizing plates (manufactured by POLATECHNO) used in Example 29 was punched into a rectangle to make a 70 mmX80 mm punched sheet. Any punched sheet was such that an absorption axis direction (or a stretching direction) of a linear polarizer became parallel with a 70 mm side, and a transmission axis direction (or a direction orthogonal with a stretching direction) became parallel with a 80 mm side.

One clockwise circularly polarizing punched sheet and one counterclockwise circularly polarizing punched sheet were paired with a linear polarizer functional side down, 70 mm sides of both sheets were contacted, and a phase difference functional side of a contacting part was fixed with a vinyl chloride pressure-sensitive adhesive tape (manufactured by NITTO DENKO CORPORATION) having a width of 5 mm.

As a result, a 70 mm x 160 mm punched sheet adhered body in which clockwise and counterclockwise circularly polarizing plates are arranged left and right is finished. It is unified that a transmission axis direction of a linear polarizer of this punched sheet adhered body becomes parallel with a 160 mm side.

Then, a thermally adhering sheet made of a polycarbonate resin having a thickness of 0.3 mm was adhered on a linear polarizer functional side of this punched sheet adhered body, as in Example 23.

Then, the vinyl chloride pressure-sensitive adhesive tape for fixation, which had been adhered on a phase difference functional side, was peeled and removed.

As a result, a circularly polarizing single-lens sheet for a circularly polarizing single-type lens, or for a circularly polarizing single-lens goggle lens having a size of 70 mm x 160 mm and a thickness of around 0.62 mm, in which clockwise and counterclockwise circularly polarizing plates were arranged left and right, a boundary being a central line, and a transmission axis direction of a linear polarizer became parallel with a 160 mm side, was finished.

Example 31
Each of clockwise and counterclockwise circularly polarizing plates prepared in Example 23 was punched into a circle having a diameter of 90 mm.

The circularly punched circularly polarizing plate was placed in a hot air dryer at 70°C for 5 hours to drying-treat it. Then, this was set in a suction-type free bending-processing apparatus equipped with a mold having a curvature radius of 87 mm, so that a convex surface became a phase difference functional side, and a concave surface became a thermally adhering functional side. The suction-type free bending-processing apparatus is such that a mold temperature is set at 125°C in advance.

The circularly polarizing plate was set on the suction-type free bending-processing apparatus and, at the same time, sucked under reduced pressure from a mold side. In that state, the plate was placed in a hot air oven at 130 °C, and was sucked under the condition of 0.05 MPa. After approximately 10 minutes, r the plate was taken out from the hot air oven, and suction under reduced pressure was stopped.

The bending-processed lens was taken out from a mold, and a flange-like peripheral part was cut off. The resulting lenses were clockwise and counterclockwise circularly polarizing lenses having a curvature radius of about 87 mm, in which a convex surface became a phase difference functional side, and a concave surface became a thermally adhering functional side.

Example 32

Each of the clockwise and counterclockwise circularly polarizing plates prepared in Example 24 was punched into a circle having a diameter of 90 mm.

As in Example 31, clockwise and counterclockwise circularly polarizing lenses having a curvature radius of about 87 mm, in which a convex surface became a phase difference functional side, and a concave surface became a thermally adhering functional side, were prepared.

Example 33
Each of the clockwise and counterclockwise circularly polarizing plates prepared in Example 25 was punched into a circle having a diameter of 90 mm.

According to the same manner as that of Example 31 except that a mold temperature was 100°C and a hot air oven temperature was 115°C, bending-processing was performed to prepare clockwise and counterclockwise circularly polarizing lenses.

Example 34
Each of the clockwise and counterclockwise circularly polarizing plates prepared in Example 26 was punched into a circle having a diameter of 90 mm.

As in Example 31, clockwise and counterclockwise circularly polarizing lenses having a curvature radius of about 87 mm, in which a convex surface became a phase difference functional side, and a concave surface became a thermally adhering functional side, were prepared.

Example 35
Each of the clockwise and counterclockwise circularly polarizing plates prepared in Example 27 was punched into a circle having a diameter of 90 mm.

As in Example 31, clockwise and counterclockwise circularly polarizing lenses having a curvature radius of about 87 mm, in which a convex surface became a phase difference functional side, and a concave surface became a thermally adhering functional side, were prepared.

Example 36
Each of the clockwise and counterclockwise circularly polarizing plates prepared in Example 28 was end mill-processed into a circular shape having a diameter of 90 mm.

According to the same manner as that of Example 31 except that a mold temperature was 90°C, and a hot air oven temperature was 95°C bonding-processing was performed to prepare clockwise and counterclockwise circularly polarizing lenses having a curvature radius of about 87 mm, in which a convex surface became a phase difference functional side, and a concave surface became a thermally adhering functional side (thermal adhering coating).

Example 37
Each of the clockwise and counterclockwise circularly polarizing plates prepared in Example 29 was end mill-processed to prepare a flat circular lens having a diameter of 85 mm, in which one side became a phase difference plate side, and another side became a thermally adhering functional side (polymethyl methacrylate resin sheet). This lens was not bending-processed.

Example 38
In order to prepare the circularly polarizing single-lens sheet prepared in Example 30 into a circularly polarizing single-type lens, the sheet was punched into a long elliptic type having a symmetric shape, in which clockwise and counterclockwise circularly polarizing plates were arranged left and right across a central border line.

The punched sheet was set on a suction-type free bending-processing apparatus equipped with a mold for single-lens having a curvature radius of 260 mm, and bending-processing was performed under the same condition as that of Example 31.

The resulting bending-processed lens was a circularly polarizing single-type lens having a curvature radius of about 260 mm, in which a convex surface became a phase difference functional side, and a concave surface became a thermally adhering functional side, and clockwise and counterclockwise circularly polarizing plates were integrated by standing in line left and right.

Example 39
A mold of 6 C (curve) for insert molding, that is, having a curvature radius of 87 mm was attached in an injection-molding machine.

The mold was opened, the circularly polarizing lens prepared in Example 31 was inserted, with a concave surface side (phase difference plate side) at the forefront, into a cavity side mold on a concave surface side, suction under reduced pressure was performed through fine pores provided in a mold on a concave surface side, thereby, a circularly polarizing lens was fixed in a mold on a concave surface side.

The mold was closed, a polycarbonate resin (viscosity average molecular weight 25000, manufactured by Teijin Chemicals, Ltd., Panlite L-1250Z) was injection-molded on a concave surface side (thermally adhering functional side) of a circularly polarizing lens, to make clockwise and counterclockwise circularly polarizing planolenses having a diameter of 86 mm, and a central thickness of 2 mm.

Example 40
A polycarbonate resin was injection-molded on a thermally adhering side of the circularly polarizing lenses prepared in Example 32, as in Example 39, to make clockwise and counterclockwise circularly polarizing planolenses having a thickness of 86 mm and a central thickness of 2 mm.

Example 41
Transparent nylon ("TROGAMID" CY-7323, manufactured by HULS) was injection-molded on a thermally adhering side of the circularly polarizing lenses prepared in Example 33, as in Example 39, to make clockwise and counterclockwise circularly polarizing planolenses having a diameter of 86 mm and a central thickness of 2 mm.

Example 42
A polycarbonate resin was injection-molded on a thermally adhering side of the circularly polarizing lenses prepared in Example 34, as in Example 39, to make clockwise and counterclockwise circularly polarizing semilenses having a diameter of 86 mm and a central thickness of 10 mm.

Example 43
A polycarbonate resin was injection-molded on a thermally adhering side of the circularly polarizing lenses prepared in Example 35, as in Example 39, to make clockwise and counterclockwise circularly polarizing planolenses having a diameter of 86 mm and a central thickness of 2 mm.

Example 44
A polyurethane resin (manufactured by BASF, ELASTOLLAN ET595) was injection-molded on a thermally adhering side of the circularly polarizing lenses prepared in Example 36, as in Example 39, to make clockwise and counterclockwise circularly polarizing planolenses having a diameter of 86 mm and a central thickness of 2 mm.

Example 45
A flat mold for insert molding was attached in an injection-molding machine. A polymethyl methacrylate resin (manufactured by Sumitomo Chemical Co., Ltd., SUMIPEX MGSS) was injection-molded on a thermally adhering side of the flat circular lenses prepared in Example 37, as in Example 39, to make clockwise and counterclockwise circularly polarizing flat lenses having an outer shape of 85 mm and a central thickness of 2 mm.

Example 46
A mold for insert molding for making a lens for single-lens glasses in which a frame and a lens were integrated, was attached in an injection-molding machine. The same mold is designed so that a curvature radius is about 260 mm (2C).

A polycarbonate resin was injection-molded on a thermally adhering functional side of the circularly polarizing single-type lens prepared in Example 38 under the same condition as that of Example 39, to make a circularly polarizing single lens-type glasses-type lens having a central thickness of 2 mm.

Example 47
Circularly polarizing lenses of Examples 39 to 45 were hard coating-treated.

Regarding clockwise and counterclockwise circularly polarizing lenses of Examples 31 to 37, as well as clockwise and counterclockwise circularly polarizing lenses after hard coating processing of Examples 39 to 45, a peripheral part was polished with a lens cutting machine so as to be consistent with a glasses frame shape, for each Example.

For each Example, a clockwise circularly polarizing lens and a counterclockwise circularly polarizing lens were paired. Paired clockwise circularly polarizing lens and counterclockwise circularly polarizing lens were placed in a glasses frame so that a concave surface (phase difference functional side) was an object side, and a concave surface (thermally adhering functional side) was an eye side.

The finished glasses were circularly polarizing twin-lens glasses in which one clockwise circularly polarizing lens and one counterclockwise circularly polarizing lens were placed in a frame.

When one wore each circularly polarizing twin-lens glasses on eyes, and viewed a stereoscopic television of a circularly polarizing system, stereoscopic viewing was good for any of glasses.

In addition, since a circularly polarizing twin-lens glasses in which clockwise and counterclockwise circularly polarizing lenses prepared in Examples 39 to 45 were placed in a frame, had the good optical performance, each lens was backed up with a resin, and the lens itself had rigidity, the lens did not drop off from a glasses frame even when the glasses was twisted.

Particularly, the circularly polarizing twin-lens glasses in which the circularly polarizing lenses prepared in Example 40 was placed in a frame had a small circular polarization variation and, when one viewed a circularly polarizing system stereoscopic television, particularly good stereoscopic viewing was possible.

Example 48
After the circularly polarizing single-type glasses-type lens prepared in Example 46 was hard coating-treated, a suspending part was attached thereto to complete a circularly polarizing single-lens glasses.

When one wore the prepared circularly polarizing single-lens glasses on eyes, and viewed a circularly polarizing system three-dimensional movie, good stereoscopic viewing was possible for any glasses.

In addition, since the same circularly polarizing single-lens glasses had good optical performance, the lens was backed up with a resin, and the resin itself had rigidity, the glasses were deformed with difficultly even when the glasses were twisted.

### Explanation of the numbers used in the figures:

1 Absorption axis direction of polarizer
2 Transmission axis direction of polarizer
3 Slow axis direction of phase difference sheet
4 Phase difference sheet
5 Linear polarizer
6 Infection-molded resin (polycarbonate resin)
7 Adhered laminate plate
8 Thermally adhering sheet (polycarbonate resin)
9 TAC polarizing plate
10 Injection-molded resin (polyamide resin)
11 Thermally adhering sheet (polyamide resin)
12 TAC sheet
13 PMMA sheet
14 Injection-molded resin (polyurethane resin)
15 Thermally adhering coating
16 Injection-molded resin (PMMA resin)
17 Thermally adhering sheet (PMMA resin).

Measurement of parameters used herein:
Measurement of a thickness is made according to JIS K 7130.
Measurement of a viscosity average molecular weight is made according to GPC (Gel Permeation Chromatography) method, and the viscosity average molecular weight is a relative value in terms of polystyrene.
Measurement of 1/4λ (measurement of phase difference): The phase difference is a value measured at a wavelength of 589 nm.
Measurement of a polarization degree is made according to JIS Z8701-1982.
Measurement of Tg is made according to a DSC (Differential scanning calorimetry) method.

## Claims

1. A clockwise or counterclockwise circularly polarizing plate, **characterized in that**, in a multilayered circularly polarizing plate having at least a phase difference functional part, a linear polarizing functional part, and a thermally adhering functional part which thermally adheres to a backup resin, the phase difference functional part is arranged on one side of the linear polarizing functional part, and the thermally adhering functional part is arranged on the other side.

2. A clockwise or counterclockwise circularly polarizing plate, **characterized in that** a linear polarizing functional part is a linear polarizer, both sides of the linear polarizer are protected with protective sheets, one protective sheet is a phase difference sheet, or a phase difference plate, and the other protective sheet is a thermally adhering sheet having the thermally adhering function.

3. A clockwise or counterclockwise circularly polarizing plate, **characterized in that** a linear polarizing functional part is a linear polarizer, both sides of the linear polarizer are protected with protective sheets, a phase difference sheet or a phase difference plate is arranged on one protective sheet, and a thermally adhering sheet having the thermally adhering function is arranged on the other protective sheet.

4. A clockwise or counterclockwise circularly polarizing plate, **characterized in that** a linear polarizing functional part is a linear polarizer, both sides of the linear polarizer are protected with protective sheets, a phase difference sheet, or a phase difference plate is arranged on one protective sheet, and another protective sheet is a thermally adhering sheet having the thermally adhering function.

5. A clockwise or counterclockwise circularly polarizing plate, **characterized in that** a linear polarizing functional part is a linear polarizer, both sides of the linear polarizer are protected with protective sheets, one protective sheet is a phase difference sheet, or a phase difference plate, and a thermally adhering sheet having the thermally adhering function is arranged on the other protective sheet.

6. The clockwise or counterclockwise circularly polarizing plate according to any one of claims 1 to 5, wherein the thermally adhering function is complemented by a coating layer for thermal adhesion, provided on a thermal adhesion side.

7. The clockwise or counterclockwise circularly polarizing plate according to any one of claims 2 to 5, wherein the protective sheet is any sheet comprising a polycarbonate resin, a polyamide resin, a polyester resin, a polyacryl resin, a polycycloolefin resin, a polyurethane resin, or an acylcellulose resin.

8. The clockwise or counterclockwise circularly polarizing plate according to any one of claims 2 to 5, wherein the phase difference sheet is a 1/4λ phase difference sheet, or a laminated structure of a 1/4λ phase difference sheet and a 1/2λ phase difference sheet.

9. The clockwise or counterclockwise circularly polarizing plate according to claim 8, wherein the phase difference sheet is any sheet comprising a polycarbonate resin, a polycycloolefin resin, a polyamide resin, or a liquid crystal polymer resin.

10. The clockwise or counterclockwise circularly polarizing plate according to claim 9, wherein the phase difference sheet is a sheet of a resin having a glass transition temperature of 150°C or higher.

11. The clockwise or counterclockwise circularly polarizing plate according to any one of claims 2 to 5, wherein the thermally adhering sheet is any sheet comprising a polycarbonate resin, a polyamide resin, a polyester resin, a polyacryl resin, a polycycloolefin resin, and a polyurethane resin.

12. A clockwise or counterclockwise circularly polarizing lens, **characterized in that** the circularly polarizing plate as defined in any one of claims 1 to 11 is shaped into a lens shape.

13. The clockwise or counterclockwise circularly polarizing lens according to claim 12, wherein the circularly polarizing lens is a bending-processed product.

14. The clockwise or counterclockwise circularly polarizing lens according to claim 13, wherein the circularly polarizing lens is a bending-processed lens obtained by a suction-type free bending-processing method.

15. The clockwise or counterclockwise circularly polarizing lens according to any one of claims 12 to 14, wherein a backup resin is injection-molded on a thermally adhering functional part of the clockwise or counterclockwise circularly polarizing lens.

16. The clockwise or counterclockwise circularly polarizing lens according to claim 15, wherein the backup resin comprises a polycarbonate resin, a polyamide resin, a polyester resin, a polyacryl resin, a polycycloolefin resin, or a polyurethane resin.

17. A circularly polarizing single-type lens for stereoscopic viewing, or a circularly polarizing single-lens goggle lens for stereoscopic viewing, **characterized in that** a backup resin is injection-molded on a thermally adhering functional part at the same time, in the state where one clockwise circularly polarizing plate and one counterclockwise circularly polarizing plate as defined in any one of claims 1 to 11, or one clockwise circularly polarizing lens and one counterclockwise circularly polarizing lens as defined in any one of claims 12 to 16 are arranged in line.

18. The circularly polarizing single-type lens for stereoscopic viewing, or the circularly polarizing single-lens goggle lens for stereoscopic viewing according to claim 17, wherein the backup resin comprises a polycarbonate resin, a polyamide resin, a polyester resin, a polyacryl resin, a polycycloolefin resin, or a polyurethane resin.

19. A circularly polarizing twin-lens glasses for stereoscopic viewing, or a circularly polarizing twin-lens goggle for stereoscopic viewing, **characterized in that** circularly polarizing lenses as defined in any one of claims 12 to 16 are sorted into clockwise circularly polarizing lenses and counterclockwise circularly polarizing lenses, one clockwise circularly polarizing lens and one counterclockwise circularly polarizing lens are paired, the clockwise circularly polarizing lens is placed in a frame for one eye, and the counterclockwise circularly polarizing lens is placed in a frame for another eye.

20. A circularly polarizing single-lens glasses for stereoscopic viewing, which comprises the circularly polarizing single-type lens for stereoscopic viewing as defined in claim 17 or 18 as an optical part.

21. A circularly polarizing single-lens goggle for stereoscopic viewing, comprising the circularly polarizing single-lens goggle lens as defined in claim 17 or 18 as an optical part.
